(19) Europäisches Patentamt
European Patent Office
Office européen des brevets

(11) **EP 3 263 947 B1**

(12) **EUROPEAN PATENT SPECIFICATION**

(45) Date of publication and mention
of the grant of the patent:
**06.12.2023 Bulletin 2023/49**

(21) Application number: **16755719.8**

(22) Date of filing: **26.02.2016**

(51) International Patent Classification (IPC):
*F16G 1/28* (2006.01)      *B29D 29/08* (2006.01)
*F16G 5/06* (2006.01)      *F16G 5/08* (2006.01)
*F16G 5/20* (2006.01)

(52) Cooperative Patent Classification (CPC):
**B29D 29/08; F16G 5/08**

(86) International application number:
**PCT/JP2016/055909**

(87) International publication number:
**WO 2016/136975 (01.09.2016 Gazette 2016/35)**

(54) **METHOD FOR FOR MANUFACTURING REINFORCING FABRIC FOR A TRANSMISSION BELT**

VERFAHREN HERSTELLUNG EINES VERSTÄRKUNGSGEWEBES FÜR EINEN TREIBRIEMEN

PROCÉDÉ DE FABRICATION DE TISSU DE RENFORT POUR UNE COURROIE DE
TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2015 JP 2015038873**
          **19.02.2016 JP 2016029759**

(43) Date of publication of application:
**03.01.2018 Bulletin 2018/01**

(73) Proprietor: **Mitsuboshi Belting Ltd.**
**Kobe-shi, Hyogo 653-0024 (JP)**

(72) Inventors:
• **YOSHIDA, Masakuni**
**Kobe-shi**
**Hyogo 653-0024 (JP)**
• **NISHIMURA, Toshihiro**
**Kobe-shi**
**Hyogo 653-0024 (JP)**
• **KIMURA, Taisuke**
**Kobe-shi**
**Hyogo 653-0024 (JP)**

(74) Representative: **Hoffmann Eitle**
**Patent- und Rechtsanwälte PartmbB**
**Arabellastraße 30**
**81925 München (DE)**

(56) References cited:
EP-A2- 0 239 334      EP-A2- 0 260 890
JP-A- S53 123 750      JP-A- 2002 005 242
JP-A- 2002 323 091      JP-A- 2002 323 091
JP-A- 2003 314 625      JP-A- 2013 024 349
JP-A- 2013 024 349      JP-U- S5 910 541
JP-U- S53 106 545      US-A- 3 784 427
US-A- 5 068 000      US-A- 5 536 554
US-A- 5 858 147      US-A1- 2004 014 544

**Description**

Technical Field

The present invention relates to a method for manufacturing a reinforcing fabric for a power transmission belt and a method for manufacturing a power transmission belt.

Background Art

In the related art, a power transmission belt has been widely used in a drive mechanism in a machinery field for automobiles, two-wheeled vehicles, and general industry. Recently, the power transmission belt is increasingly used under a heavy-load environment. Therefore, a durability of the power transmission belt under a heavy-load environment is required to be improved.

Particularly, in the power transmission belt for a purpose in which a high durability is required, a rigidity of a belt main body is required to be improved and a bendability of the belt main body is also required. In regard to such a purpose, a power transmission belt having an improved bendability by providing a cog portion in a compression rubber layer on an inner circumferential side is used. The cog portion is configured to be a portion provided with cog ridges and cog valleys which are alternately arranged along a belt longitudinal direction that is a circumferential direction of the power transmission belt. In addition, in order to improve the durability of the above-described power transmission belt, a reinforcing fabric is disposed on a surface of the cog portion. In regard to a purpose in which the above-described power transmission belt is used, for example, there is a raw edge V-belt (variable speed belt) used in a continuously variable transmission apparatus.

For example, Patent Literatures 1 to 4 disclose known transmission belts in each of which the reinforcing fabric is disposed on the surface. In the power transmission belt disclosed in Patent Literature 1, the reinforcing fabric is disposed on both a surface on an inner circumferential side and a surface on an outer circumferential side. The reinforcing fabric on the surface of the power transmission belt in Patent Literature 1 is joined together at a joint portion extending at an oblique angle (bias angle) with respect to a belt longitudinal direction (circumferential direction of the power transmission belt). The reinforcing fabric on the surface of the power transmission belt in Patent Literature 1 is also provided with a joint portion extending along a belt-width direction that is a direction orthogonal to the belt longitudinal direction, in addition to the joint portion at an oblique angle with respect to the belt longitudinal direction.

Patent Literatures 2 to 4 disclose transmission belts configured as V-ribbed belts. In each of the power transmission belts disclosed in Patent Literatures 2 to 4, the reinforcing fabric is disposed on an upper surface. That is, in each of the power transmission belts disclosed in Patent Literatures 2 to 4, the reinforcing fabric is disposed on a surface on an outer circumferential side that is opposite to an inner circumferential side provided with plural ribs extending along the belt longitudinal direction.

In addition, the reinforcing fabric on the surface of the power transmission belt on the outer circumferential side in Patent Literature 2 is formed by joining end portions of a belt fabric which is formed by joining end portions of plural fabric to each another. Therefore, in the reinforcing fabric disclosed in Patent Literature 2, the joint portion is provided in plural places in the belt longitudinal direction.

In addition, in the reinforcing fabric on the surface of the power transmission belt on the outer circumferential side in Patent Literature 3, cut canvas formed with a tubular bag-shaped woven fabric spirally cut with respect to an axial direction of the tube shape is used as a base material. The cut canvas is stretched in a direction orthogonal to a longitudinal direction and is subjected to an impregnation processing in a bonding liquid. Thereafter, the outcome thereof is cut into pieces having predetermined lengths, and end portions are joined together.

In addition, in the reinforcing fabric on the surface of the power transmission belt on the outer circumferential side in Patent Literature 4, a tubular canvas, which is prepared by sewing end portions of a plain-woven canvas in a width direction such that the end portions are joined together, is used as a base material. The tubular canvas is spirally cut with respect to the axial direction of the tube shape and is used as the reinforcing fabric. Therefore, in the reinforcing fabric, a portion in which the end portions of the plain-woven fabric in the width direction are joined together remains as the joint portion extending at an oblique angle (bias angle) with respect to the belt longitudinal direction (circumferential direction of the power transmission belt).

Other related art may be found in Patent Literatures 5 to 9, where Patent Literatures 5 to 7 are directed to belt for power transmission and method of manufacturing same, Patent Literature 8 describing a method of making a reinforcing fabric for power transmission belts, hoses and the like and Patent Literature 9 being directed to a power transmission belt and a method of forming a power transmission belt. Further related art may be found in EP 0260890 A2, JP 553106545 U, JP 553123750 A and EP 0239334 A2.

Yet further, US 3 784 427 A describes a fabric suitable for a V-belt, which covers and hose reinforcing is made by bias-cutting a tubular woven fabric into a continuous strip, stretching the continuous strip in the width direction as with a pin tenter frame to increase the angle between warp and filling to greater than 90°, applying an elastomeric coating, and longitudinally slitting the strip into a plurality of narrower tapes which are then wrapped around a V-belt core in a conventional manner or used as hose reinforcing.

Citation List

Patent Literature

Patent Literature 1: JP-B-63-24181
Patent Literature 2: Japanese Patent No. 3709472
Patent Literature 3: JP-A-11-300847
Patent Literature 4: JP-A-2000-352444
Patent Literature 5: JP-A-2002-005242
Patent Literature 6: JP-A-2002-323091
Patent Literature 7: JP-A-2013-024349
Patent Literature 8: US 5 068 000 A
Patent Literature 9: US 2004/014544 A1

Summary of Invention

Technical Problem

As described above, in regard to a purpose in which the high durability is required, from the viewpoint of a balance between the rigidity and the bendability of a belt main body, a power transmission belt in which a cog portion is provided in a compression rubber layer on an inner circumferential side is used. In such a power transmission belt, in regard to a bending of the power transmission belt during running, cog valleys of a cog portion are required to have a flexibility so as to follow the bending of the power transmission belt. Therefore, the cog valleys in the cog portion become portions where stress is concentrated when the belt is bent during running.

Meanwhile, improvement of the durability of the power transmission belt is achieved by disposing the reinforcing fabric as disclosed in Patent Literatures 1 to 4 on the surface of the cog portion. However, even in the power transmission belt in which the reinforcing fabric is disposed on the surface of the cog portion, in a case of being used under a heavy-load environment, there are possibilities that a crack is likely to be caused in the cog valleys of the cog portion, it is difficult to ensure sufficient life, and the power transmission belt is broken in an early stage.

In consideration of the foregoing circumstances, the present inventors have intensively investigated a power transmission belt in which even in a case of being used under a heavy-load environment, the power transmission belt can be restrained from being broken in an early stage and a high durability can be realized. As a result, the present inventors have found that if a joint portion of the reinforcing fabric disposed on the surface of the cog portion is present in the cog valley, acting stress is likely to be concentrated on the joint portion in a non-uniform manner, excessive concentration of the stress is likely to be caused, and a crack is likely to be caused on the joint portion in an early stage. Furthermore, the inventors of this application have found that if the joint portion of the reinforcing fabric is present in the cog valley, the reinforcing fabric is likely to be insufficient to follow expansion and contraction when the power transmission belt is bent, and a crack is likely to be caused on the joint portion in an early stage.

The reinforcing fabric disclosed in Patent Literatures 1 and 4 is joined together at the joint portion extending at the oblique angle (bias angle) with respect to the belt longitudinal direction (circumferential direction of the power transmission belt). Therefore, in a case where the reinforcing fabric in Patent Literatures 1 and 4 is disposed on the surface of the cog portion, the joint portion has a form in which at least a part thereof is certainly present in the cog valley, and there is a possibility that a crack of the cog valley is caused in the portion thereof in an early stage. In addition, each of the reinforcing fabrics disclosed in Patent Literatures 2 to 4 is a reinforcing fabric disposed on the surface of the power transmission belt on the outer circumferential side. Therefore, depending on the configurations disclosed in Patent Literatures 2 to 4, it is not possible to provide a configuration realizing a high durability in a case of being used under a heavy-load environment in the power transmission belt in which the cog portion is provided in the compression rubber layer on the inner circumferential side.

The present invention has been made in consideration of the foregoing circumstances, and an object thereof is to provide a power transmission belt, a method for manufacturing a power transmission belt, a reinforcing fabric, and a method for manufacturing reinforcing fabric, in which even in a case of being used under a heavy-load environment, a crack can be restrained from being caused in a cog valley in an early stage and a high durability can be realized.

Solution to Problem

The present invention is defined by the appended independent claim 1. The respective dependent claims describe optional features and preferred embodiments.

(1) In order to achieve the object, according to an aspect of the present disclosure, a power transmission belt includes a compression rubber layer that is provided on an inner circumferential side, a cog portion that is provided in at least the compression rubber layer and has cog ridges and cog valleys alternately arranged along a belt longitudinal direction, and a reinforcing fabric layer that covers a surface of the cog portion, wherein the reinforcing fabric layer includes at least one reinforcing fabric that is bonded to surfaces of the cog ridges and the cog valleys along the belt longitudinal direction and that covers the surface of the cog portion, wherein both end portions of the reinforcing fabric are joined to each other at only at least one joint portion in the belt longitudinal direction, and wherein the joint portion is disposed at only a position corresponding to the cog ridge.

According to this configuration, the both end portions of the reinforcing fabric covering the surface of the cog portion along the belt longitudinal direction are joined to each other and are joined at only at least one joint portion in the belt longitudinal direction. The joint portion provided in only at least one place in the reinforcing fabric is disposed at a position corresponding to the cog ridge. Therefore, the joint portion of the reinforcing fabric is certainly disposed in the cog ridge and is prevented from being disposed in the cog valley.

Thus, according to the configuration described above, the joint portion of the reinforcing fabric disposed on the surface of the cog portion is prevented from being present in the cog valley. Therefore, stress is restrained from being concentrated in the cog valley in a non-uniform manner and resulting in excessive concentration of the stress, and uniformity of stress in the cog valley can be achieved. The reinforcing fabric is also restrained from being insufficient to follow expansion and contraction when the power transmission belt is bent, and improvement of the resistance to fatigue from bending can also be achieved. Accordingly, even in a case where the power transmission belt having the above-described configuration is used under a heavy-load environment, a crack can be restrained from being caused in the cog valley in an early stage and improvement of the durability life can be achieved. That is, it is possible to realize a high durability in a case of being used under a heavy-load environment.

Therefore, according to the configuration described above, it is possible to provide a power transmission belt in which even in a case of being used under a heavy-load environment, a crack can be restrained from being caused in a cog valley in an early stage and a high durability can be realized.

(2) It is preferable that in the power transmission belt, the joint portion is contained only one.

According to this configuration, since only one joint portion is contained in the power transmission belt, compared to a case where plural joint portions are contained in the power transmission belt, the durability of the power transmission belt can be ensured.

(3) It is preferable that the joint portion is provided so as to extend in a substantially straight manner along a direction substantially orthogonal to the belt longitudinal direction

As in this configuration, in a case where the joint portion is provided so as to extend in a substantially straight manner along a belt-width direction (direction substantially orthogonal to the belt longitudinal direction), a part of the joint portion of the reinforcing fabric disposed in the cog ridge is prevented from escaping from the cog ridge and being disposed in the cog valley. That is, the joint portion of the reinforcing fabric is prevented from extending at an oblique angle (a bias angle) with respect to the belt longitudinal direction (circumferential direction of the power transmission belt) and is reliably disposed in the cog ridge. Therefore, according to this configuration, the joint portion can be more reliably disposed in only the cog ridge.

(4) It is preferable that the reinforcing fabric is a wide angle woven fabric having an intersection angle between a warp and a weft viewed in the belt longitudinal direction being 110 degrees or more and 130 degrees or less, and the warp and the weft in the wide angle woven fabric are fixed to each other by a hardened product of a bonding liquid.

As in this configuration, in a case where the intersection angle between the warp and the weft viewed in the belt longitudinal direction is set to be 110 degrees or more and 130 degrees or less, the reinforcing fabric including the warp and the weft can sufficiently follow the bending of the power transmission belt and can expand and contract. Accordingly, the durability of the reinforcing fabric can be further enhanced.

(5) It is preferable that the reinforcing fabric is prepared in a reinforcing fabric preparing step includes a cutting step, a bonding liquid immersing step, a wide angle processing step, and a drying step, wherein, in the cutting step, a bag-shaped woven fabric configured by weaving a warp extending along an axial direction and a weft extending along a circumferential direction is spirally cut with respect to the axial direction, in the bonding liquid immersing step, a seamlessly continuous belt-shaped fabric prepared by spirally cutting the bag-shaped woven fabric is immersed in a bonding liquid, in the wide angle processing step, the belt-shaped fabric to which the bonding liquid adheres is stretched in a width direction, and in the drying step, a wide angle woven fabric obtained in the wide angle processing step is dried and the bonding liquid is hardened.

According to this configuration, when the reinforcing fabric of the power transmission belt is prepared, the belt-shaped fabric to which the bonding liquid adheres is stretched in the width direction, and the intersection angle between the warp and the weft can be widened. At this time, since the belt-shaped fabric is stretched in the width direction such that the length in a longitudinal direction is shortened, a continuous wide angle woven fabric having a widened intersection angle can be easily prepared. In addition, according to the configuration described above, a hardening processing of the bonding liquid is performed by drying the wide angle woven fabric of which the intersection angle is widened while having the bonding liquid that has adhered thereto. Therefore, the bonding liquid is promptly hardened in a state of retaining a desired intersection angle, and the intersection angle can be fixed. Thus, the desired intersection angle can be efficiently retained by performing processing of bonding and processing of widening the intersection angle approximately at the same time.

(6) In order to achieve the object according to an embodiment of the present invention, there is provided a method for manufacturing a power transmission belt including a compression rubber layer that is provided on an inner circumferential side, a cog portion that is provided in at least the compression rubber layer and has cog ridges and cog valleys alternately arranged along a belt longitudinal direction, and a reinforcing fabric layer that covers a surface of the cog portion. The method for manufacturing a power transmission belt includes a reinforcing fabric preparing step of preparing a reinforcing fabric, a laminate forming step of forming an endless laminate in which the reinforcing fabric layer including at least one reinforcing fabric and an unvulcanized rubber sheet for the compression rubber layer are laminated and the cog portion is provided in the unvulcanized rubber sheet, a belt molded body forming step of forming an unvulcanized belt molded body from the laminate, and a vulcanizing step of vulcanizing the belt molded body, wherein in the laminate forming step, the reinforcing fabric layer is bonded to surfaces of the cog ridges and the cog valleys in the laminate, the reinforcing fabric is disposed so as to cover the surface of the cog portion along the belt longitudinal direction, both end portions of the reinforcing fabric are joined to each other at only at least one joint portion in the belt longitudinal direction, and the joint portion is disposed at only a position corresponding to the cog ridge.

According to this configuration, the both end portions of the reinforcing fabric covering the surface of the cog portion along the belt longitudinal direction are joined to each other and are joined at only at least one joint portion in the belt longitudinal direction. The joint portion provided in at least one place only in the reinforcing fabric is disposed at a position corresponding to the cog ridge. Therefore, in the power transmission belt manufactured based on the above-described configuration, the joint portion of the reinforcing fabric is certainly disposed in the cog ridge and is prevented from being disposed in the cog valley.

Thus, according to the configuration described above, it is possible to manufacture a power transmission belt in which the joint portion of the reinforcing fabric disposed on the surface of the cog portion is prevented from being present in the cog valley. Therefore, according to the power transmission belt manufactured based on the above-described configuration, stress is restrained from being concentrated in the cog valley in a non-uniform manner and resulting in excessive concentration of the stress, and uniformity of stress in the cog valley can be achieved. The reinforcing fabric is also restrained from being insufficient to follow expansion and contraction when the power transmission belt is bent, and improvement of the resistance to fatigue from bending can also be achieved. Accordingly, it is possible to manufacture a power transmission belt in which even in a case where the power transmission belt is used under a heavy-load environment, a crack can be restrained from being caused in the cog valley in an early stage and improvement of the durability life can be achieved. That is, it is possible to manufacture a power transmission belt in which a high durability in a case of being used under a heavy-load environment is realized.

Therefore, according to the configuration described above, it is possible to provide a method for manufacturing a power transmission belt in which even in a case of being used under a heavy-load environment, a crack can be restrained from being caused in a cog valley in an early stage and a high durability can be realized.

(7) It is preferable that in the method for manufacturing a power transmission belt, the joint portion is contained only one.

According to this configuration, since only one joint portion is contained in the power transmission belt, compared to a case where plural joint portions are contained in the power transmission belt, the durability of the power transmission belt can be ensured.

(8) It is preferable that the joint portion is disposed so as to extend in a substantially straight manner along a direction substantially orthogonal to the belt longitudinal direction.

As in this configuration, in a case where the joint portion is provided so as to extend in a substantially straight manner along a belt-width direction (direction substantially orthogonal to the belt longitudinal direction), a part of the joint portion of the reinforcing fabric disposed in the cog ridge is prevented from escaping from the cog ridge and being disposed in the cog valley. That is, the joint portion of the reinforcing fabric is prevented from extending at an oblique angle (bias angle) with respect to the belt longitudinal direction (circumferential direction of the power transmission belt) and is reliably disposed in the cog ridge. Therefore, according to this configuration, the joint portion can be more reliably disposed in only the cog ridge.

(9) It is preferable that in the belt molded body forming step, another layer is laminated on an opposite side to the cog portion in the laminate

According to the configuration, since another layer is laminated on an opposite side to the cog portion in the laminate, it is possible to manufacture a power transmission belt having an appropriate configuration.

(10) It is preferable that the reinforcing fabric preparing step includes a cutting step, a bonding liquid immersing step, a wide angle processing step, and a drying step, wherein, in the cutting step, a bag-shaped woven fabric configured by weaving a warp extending along an axial direction and a weft extending along a circumferential direction is spirally cut with respect to the axial direction, in the bonding liquid immersing step, a seamlessly continuous belt-shaped fabric prepared by spirally cutting the bag-shaped woven fabric is immersed in a bonding liquid, in the wide angle processing step, the belt-shaped fabric to which the bonding liquid adheres is stretched in a width direction, and in the drying step, a wide angle woven fabric obtained in the wide angle processing step is dried and the bonding liquid is hardened.

According to this configuration, when the reinforcing fabric of the power transmission belt is prepared, in the wide angle processing step of stretching the belt-shaped fabric to which the bonding liquid adheres in the width direction and widening an intersection angle between the warp and the weft, since the belt-shaped fabric is stretched in the width direction such that the length in a longitudinal direction is shortened, a continuous wide angle woven fabric having a widened intersection angle can be easily prepared. In addition, according to the configuration described above, a hardening processing of the bonding liquid is performed by drying the wide angle woven fabric of which the intersection angle is widened while having the bonding liquid that has adhered thereto. Therefore, the bonding liquid is promptly hardened in a state of retaining a desired intersection angle, and the intersection angle can be fixed. Thus, the desired intersection angle can be efficiently retained by performing processing of bonding and processing of widening the intersection angle approximately at the same time.

(11) It is preferable that in the wide angle processing step, a wide angle processing is performed so that the belt-shaped fabric to which the bonding liquid adheres has an intersection angle between the warp and the weft viewed in the belt longitudinal direction being 120 degrees or more and 140 degrees or less.

As in this configuration, in a case where the belt-shaped fabric to which the bonding liquid adheres is subjected to the wide angle processing such that the intersection angle between the warp and the weft viewed in the belt longitudinal direction is 120 degrees or more and 140 degrees or less, the intersection angle between the warp and the weft included in the reinforcing fabric after the vulcanizing step becomes an intersection angle (for example, 110 degrees or more and 130 degrees or less) slightly smaller than an angle of 120 degrees or more and 140 degrees or less. When the intersection angle between the warp and the weft included in the reinforcing fabric after the vulcanizing step is set to be 110 degrees or more and 130 degrees or less, the reinforcing fabric including the warp and the weft can sufficiently follow the bending of the power transmission belt and can expand and contract. Accordingly, the durability of the reinforcing fabric can be further enhanced.

(12) In order to achieve the object according to further another aspect of the present disclosure, a reinforcing fabric is, in a power transmission belt including a compression rubber layer that is provided on an inner circumferential side, a cog portion that is provided in at least the compression rubber layer and has cog ridges and cog valleys alternately arranged along a belt longitudinal direction, and a reinforcing fabric layer that covers a surface of the cog portion, included in the reinforcing fabric layer, both end portions of which are joined to each other at only at least one joint portion in the belt longitudinal direction, and in which the joint portion is disposed at only a position corresponding to the cog ridge, wherein the reinforcing fabric is a wide angle woven fabric having an intersection angle between a warp and a weft viewed in the belt longitudinal direction being 110 degrees or more and 130 degrees or less and the warp and the weft are fixed to each other by a hardened product of bonding liquid.

According to this configuration, the both end portions of the reinforcing fabric covering the surface of the cog portion along the belt longitudinal direction are joined to each other and are joined at only at least one joint portion in the belt longitudinal direction. The joint portion provided in at least one place only in the reinforcing fabric is disposed at a position corresponding to the cog ridge. Therefore, the joint portion of the reinforcing fabric is certainly disposed in the cog ridge and is prevented from being disposed in the cog valley.

Thus, according to the configuration described above, the joint portion of the reinforcing fabric disposed on the surface of the cog portion is prevented from being present in the cog valley. Therefore, stress is restrained from being concentrated in the cog valley in a non-uniform manner and resulting in excessive concentration of the stress, and uniformity of stress in the cog valley can be achieved. The reinforcing fabric is also restrained from being insufficient to follow expansion and contraction when the power transmission belt is bent, and improvement of the resistance to fatigue from bending can also be achieved. Accordingly, even in a case where the power transmission belt having the above-described configuration is used under a heavy-load environment, a crack can be restrained from being caused in the cog valley in an early stage and improvement of the durability life can be achieved. That is, it is possible to realize a high durability in a case of being used under a heavy-load environment.

In addition, as in this configuration, in a case where the intersection angle between the warp and the weft viewed in the belt longitudinal direction is set to be 110 degrees or more and 130 degrees or less, the reinforcing fabric including the warp and the weft can sufficiently follow the bending of the power transmission belt and can expand and contract. Accordingly, the durability of the reinforcing fabric can be further enhanced.

Therefore, according to the configuration described above, it is possible to provide a reinforcing fabric suitable for a power transmission belt in which even in a case of being used under a heavy-load environment, a crack can be restrained from being caused in a cog valley in an early stage and s high durability can be realized.

(13) In order to achieve the object according to claim 1 of the present invention, there is provided a method for manufacturing a reinforcing fabric that is, in a power transmission belt including a compression rubber layer that is provided on an inner circumferential side, a cog portion that is provided in at least the compression rubber layer and has cog ridges and cog valleys alternately arranged along a belt longitudinal direction, and a reinforcing fabric layer that covers a surface of the cog portion, included in the reinforcing fabric layer, both end portions of which are joined to each other at only at least one joint portion in the belt longitudinal direction, and in which the joint portion is disposed at only a position corresponding to the cog ridge. The method for manufacturing a reinforcing fabric includes a cutting step, a bonding liquid immersing step, a wide angle processing step, and a drying step, wherein, in the cutting step, a bag-shaped woven fabric configured by weaving a warp extending along an axial direction and a weft extending along a circumferential direction is spirally cut with respect to the axial direction, in the bonding liquid immersing step, a belt-shaped fabric prepared by spirally cutting the bag-shaped woven fabric is immersed in a bonding liquid, in the wide angle processing step, the belt-shaped fabric to which the bonding liquid adheres is stretched in a width direction, and in the drying step, a wide angle woven fabric obtained in the wide angle processing step is dried and the bonding liquid is hardened.

According to this configuration, the both end portions of the reinforcing fabric covering the surface of the cog portion along the belt longitudinal direction are joined to each other and are joined at only at least one joint portion in the belt longitudinal direction. The joint portion provided in at least one place only in the reinforcing fabric is disposed at a position corresponding to the cog ridge. Therefore, the joint portion of the reinforcing fabric is certainly disposed in the cog ridge and is prevented from being disposed in the cog valley.

Thus, according to the configuration described above, the joint portion of the reinforcing fabric disposed on the surface of the cog portion is prevented from being present in the cog valley. Therefore, stress is restrained from being concentrated in the cog valley in a non-uniform manner and resulting in excessive concentration of the stress, and uniformity of stress in the cog valley can be achieved. The reinforcing fabric is also restrained from being insufficient to follow expansion and contraction when the power transmission belt is bent, and improvement of the resistance to fatigue from bending can also be achieved. Accordingly, even in a case where the power transmission belt having the above-described configuration is used under a heavy-load environment, a crack can be restrained from being caused in the cog valley in an early stage and improvement of the durability life can be achieved. That is, it is possible to realize a high durability in a case of being used under a heavy-load environment.

Therefore, according to the configuration described above, it is possible to provide a method for manufacturing a reinforcing fabric included in a power transmission belt in which even in a case of being used under a heavy-load environment, a crack can be restrained from being caused in a cog valley in an early stage and a high durability can be realized.

In addition, according to this configuration, when the reinforcing fabric of the power transmission belt is prepared, in the wide angle processing step of stretching the belt-shaped fabric to which the bonding liquid adheres in the width direction and widening an intersection angle between the warp and the weft, since the belt-shaped fabric is stretched in the width direction such that the length in a longitudinal direction is shortened, a continuous wide angle woven fabric having a widened intersection angle can be easily prepared. In addition, according to the configuration described above, a hardening processing of the bonding liquid is performed by drying the wide angle woven fabric of which the intersection angle is widened while having the bonding liquid that has adhered thereto. Therefore, the bonding liquid is promptly hardened in a state of retaining a desired intersection angle, and the intersection angle can be fixed. Thus, the desired intersection angle can be efficiently retained by performing processing of bonding and processing of widening the intersection angle approximately at the same time.

Advantageous Effects of Invention

According to the present invention, it is possible to provide a method for manufacturing a power transmission belt and a method for manufacturing a reinforcing fabric, in which even in a case of being used under a heavy-load environment, a crack can be restrained from being caused in a cog valley in an early stage and high durability can be realized.

Brief Description of Drawings

FIG. 1 is a view illustrating an entire shape of a power transmission belt according to an embodiment of the present invention.

FIG. 2 is a perspective cross-sectional view partially illustrating the power transmission belt illustrated in FIG. 1.

FIG. 3 is a cross-sectional view partially illustrating the power transmission belt illustrated in FIG. 1.

FIG. 4 is a cross-sectional view partially illustrating a cog portion in the power transmission belt illustrated in FIG. 1.

FIG. 5 is a flow chart illustrating a method for manufacturing the power transmission belt illustrated in FIG. 1.

FIG. 6 is a flow chart illustrating a reinforcing fabric preparing step in the manufacturing method illustrated in FIG. 5.

FIG. 7 is a view for describing a cutting step in the reinforcing fabric preparing step illustrated in FIG. 6 and is a schematic view partially illustrating a bag-shaped woven fabric.

FIG. 8 is a schematic view partially illustrating s belt-shaped fabric prepared in the cutting step.

FIG. 9 is a view for describing a wide angle processing step in the reinforcing fabric preparing step illustrated in FIG. 6 and is a schematic view partially illustrating the belt-shaped fabric and wide angle woven fabric.

FIG. 10 is a schematic view of an apparatus layout of a manufacturing line executing each process of a bonding liquid immersing step, the wide angle processing step, and a drying step in the reinforcing fabric preparing step illustrated in FIG. 6.

FIG. 11 is a schematic view illustrating a wide angle processing apparatus in the manufacturing line illustrated in FIG. 10.

FIG. 12 is a view for describing a laminate forming step in the manufacturing method illustrated in FIG. 5 and is a schematic view illustrating a state where reinforcing fabric is disposed so as to be wound around an outer circumference of a die.

FIG. 13 is a view for describing the laminate forming step and is a view for describing a step of winding the reinforcing fabric around the outer circumference of the die.

FIG. 14 is a view for describing the laminate forming step and is a cross-sectional view schematically illustrating a part of the outer circumference of the die and a part of the reinforcing fabric wound around the outer circumference of the die.

FIG. 15 is a view for describing the laminate forming step and is a view schematically illustrating a state where an unvulcanized rubber sheet is disposed in the outer circumference of the die having the reinforcing fabric wound around.

FIG. 16 is a view for describing the laminate forming step and is a view schematically illustrating a state where the reinforcing fabric and the unvulcanized rubber sheet are laminated in the outer circumference of the die and an endless laminate having the cog portion provided in the unvulcanized rubber sheet is formed.

FIG. 17 is a view schematically illustrating a layout of a testing apparatus for a performance evaluation test of the power transmission belt.

FIG. 18 is a view for describing a modification example of a joint portion of reinforcing fabric and is a cross-sectional view partially illustrating a cog portion and the reinforcing fabric.

FIG. 19 is a view for describing a modification example of a laminate forming step and is a cross-sectional view schematically illustrating the reinforcing fabric, the unvulcanized rubber sheet, and a cog forming die.

FIG. 20 is a view for describing the modification example of the laminate forming step and is a cross-sectional view schematically illustrating a state where patterning is performed on a surface of the cog forming die and the cog portion is formed in the unvulcanized rubber sheet.

FIG. 21 is a view for describing the modification example of the laminate forming step and is a view schematically illustrating a part of a cross section in a state where an endless laminate is formed in an outer circumference of a die.

FIG. 22 is a view for describing a belt molded body forming step, which is performed after the laminate forming step illustrated in Figs. 19 to 21 is performed, and is a view schematically illustrating a state where in the outer circumference of the die, plural unvulcanized rubber sheets are further laminated in an outer circumference of the endless laminate.

Description of Embodiment

Hereinafter, an embodiment of the present invention will be described with reference to the drawings. In the description below, first, a power transmission belt according to the embodiment of the present invention will be described. Subsequently, a method for manufacturing a power transmission belt will be described.

[Schematic Configuration of Transmission Belt]

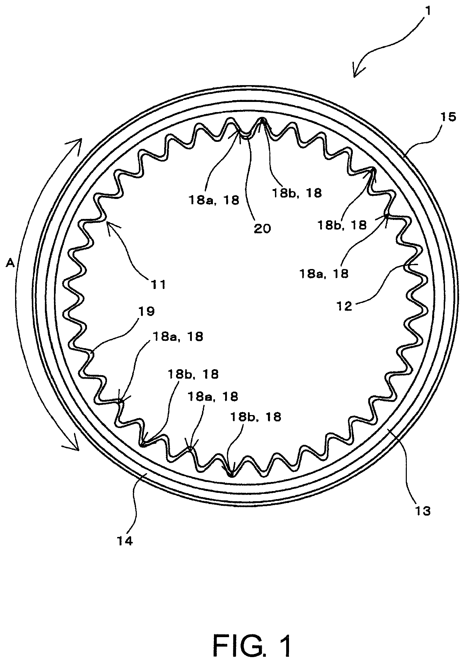

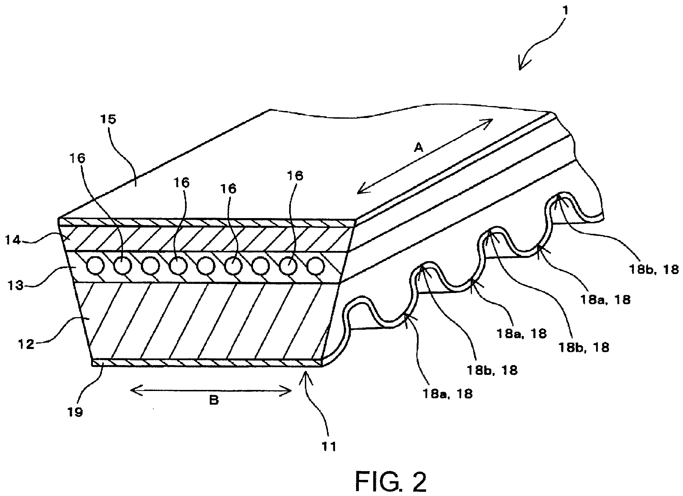

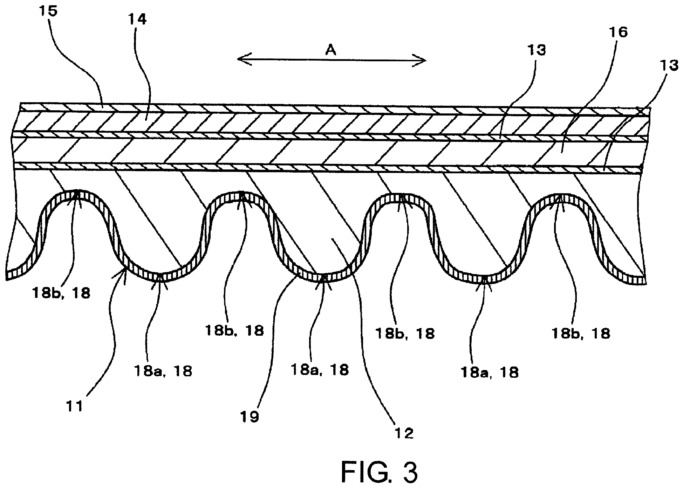

FIG. 1 is a view illustrating an entire shape of a power transmission belt 1 according to the embodiment of the present invention. FIG. 2 is a perspective cross-sectional view partially illustrating the power transmission belt 1. FIG. 3 is a cross-sectional view partially illustrating the power transmission belt 1. The power transmission belt 1 illustrated in FIG. 1 to FIG. 3 is used as an endless belt for transmitting power in a drive mechanism in the machinery field for two-wheeled vehicles and general industry. For example, the power transmission belt 1 is used as a raw edge V-belt (variable speed belt) which is used in a continuously variable transmission apparatus.

As illustrated in FIG. 1 to FIG. 3, the power transmission belt 1 is configured to include a reinforcing fabric layer 11, a compression rubber layer 12, an adhesion rubber layer 13, tension member 16, a tension rubber layer 14, and an upper surface reinforcing fabric 15.

The power transmission belt 1 has a laminated structure in which the reinforcing fabric layer 11, the compression rubber layer 12, the adhesion rubber layer 13, the tension rubber layer 14, and the upper surface reinforcing fabric 15 are sequentially laminated from an inner circumferential side toward an outer circumferential side of the belt. The shape of a cross section in a belt-width direction is a trapezoid shape in which the belt width reduces from the outer circumferential side toward the inner circumferential side of the belt. Moreover, the tension member 16 is embedded in the adhesion rubber layer 13.

[Compression rubber layer]

The compression rubber layer 12 is disposed on the inner circumferential side in the power transmission belt 1 and is provided as a rubber layer extending along a belt longitudinal direction that is a circumferential direction of the power transmission belt 1. Examples of the rubber component configuring the compression rubber layer 12 include vulcanizable or cross-linkable rubber, for example, diene-based rubber (natural rubber, isoprene rubber, butadiene rubber, chloroprene rubber, styrene butadiene rubber, acrylonitrile butadiene rubber (nitrile rubber), hydrogenated nitrile rubber, and the like), an ethylene-$\alpha$-olefin elastomer, chlorosulfonated polyethylene rubber, alkylated chlorosulfonated polyethylene rubber, epichlorohydrin rubber, acrylic rubber, silicone rubber, urethane rubber, and fluoro-rubber. These rubber components can be used alone or in a combination of two or more kinds thereof. The preferable rubber components are an ethylene-$\alpha$-olefin elastomer (ethylene-$\alpha$-olefin-based rubber such as an ethylene-propylene copolymer (EPM) and an ethylene-propylene-diene terpolymer (EPDM)) and chloroprene rubber. The particularly preferable rubber component is chloroprene rubber. The chloroprene rubber may be a sulfur-modified type or may be a non-sulfur-modified type.

The belt longitudinal direction is indicated by the bi-directional arrow A in FIG. 1 to FIG. 3. A cross section partially illustrated in FIG. 2 is a cross section in the belt-width direction that is a direction orthogonal to the belt longitudinal direction. In FIG. 2, the belt-width direction is indicated by the bi-directional arrow B. A cross section illustrated in FIG. 3 is a cross section in the belt longitudinal direction.

[Adhesion Rubber Layer]

The adhesion rubber layer 13 is formed of a rubber composition including a rubber component. In the adhesion rubber layer 13, the tension member 16 extends in the belt longitudinal direction and is embedded. Generally, tension cord serving as the tension member 16 is embedded side by side parallel to the belt longitudinal direction (spirally) at predetermined pitches (that is, arranged in the belt-width direction at predetermined pitches).

As the tension cord, a helical cord (for example, organzine, single twist, and Lang lay) using multifilament yarn can be generally used. As fibers configuring the tension cord, a synthetic fiber such as a polyester fiber and an aramid fiber, an inorganic fiber such as a glass fiber and a carbon fiber, and the like can be used. The surface of the tension cord may be subjected to a common bonding processing (or surface processing). The rubber component of the adhesion rubber layer 13 can be selected from the kinds disclosed in the section of the compression rubber layer 12. There are many cases where a rubber of the same system or the same kind as the rubber component of the compression rubber layer 12 is used as the rubber component. The adhesion rubber layer 13 is an arbitrary element and can be omitted.

[Tension Rubber Layer]

The tension rubber layer 14 is disposed on the outer circumferential side of the adhesion rubber layer 13 and is provided as a rubber layer extending along the belt longitudinal direction. The rubber component configuring the tension rubber layer 14 can be selected from the kinds disclosed in the section of the compression rubber layer 12. There are many cases where a rubber of the same system or the same kind as the rubber component of the compression rubber layer 12 is used as the rubber component.

[Cog Portion]

In addition, the power transmission belt 1 includes a cog portion 18 provided in at least the compression rubber layer 12. The cog portion 18 is provided as a portion of the compression rubber layer 12 on the inner circumferential side. The cog portion 18 is configured to be a portion provided with cog ridges 18a and cog valleys 18b which are alternately arranged along the belt longitudinal direction that is the circumferential direction of the power transmission belt 1.

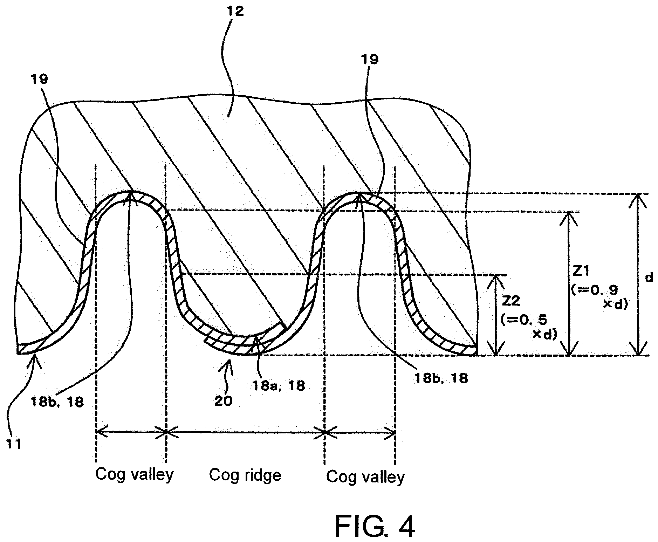

FIG. 4 is a cross-sectional view partially illustrating the cog portion 18. The cross section illustrated in FIG. 4 is a cross section in the belt longitudinal direction. As illustrated in FIG. 1 to FIG. 4, the cog ridges 18a and the cog valleys 18b are provided so as to be alternately arranged throughout the entire circumference of a portion of the compression rubber layer 12 on the inner circumferential side along the belt longitudinal direction of the power transmission belt 1. Each of the cog ridges 18a is provided as a portion which protrudes and bulges in a ridge shape in the compression rubber layer 12 on the inner circumferential side. Each of the cog valleys 18b is provided as a portion of a curved surface which is recessed in a valley shape in the compression rubber layer 12 from the inner circumferential side toward the outer circumferential side. That is, in the cog portion 18, the cog ridge 18a is configured to be a region other than the cog valley 18b which is configured to be a portion of the curved surface (curved portion) recessed in a valley shape. In the present embodiment, with reference to FIG. 4, the region of the cog ridge 18a is defined as a region Z1 covering 90% of a cog depth d (height) in a belt thickness direction based on the apex portion of the cog ridge 18a. In FIG. 4, in regard to the cog ridge 18a and the cog valley 18b disposed so as to be adjacent to each other, a boundary between the region of the cog ridge 18a and the region of the cog valley 18b is illustrated by a dotted line.

[Upper Surface Reinforcing fabric]

The upper surface reinforcing fabric 15 is provided as reinforcing fabric which is bonded to the surface of the tension rubber layer 14 on the outer circumferential side and covers the surface of the tension rubber layer 14. Accordingly, the upper surface reinforcing fabric 15 is provided so as to cover along the outer circumference of the power transmission belt 1 in the belt longitudinal direction. For example, the upper surface reinforcing fabric 15 is formed of a woven fabric. As the material of the woven fabric, fibers such as cotton, polyethylene terephthalate (PET), nylon, and aramid are used. The upper surface reinforcing fabric 15 is an arbitrary element and can be omitted.

[Reinforcing fabric Layer]

The reinforcing fabric layer 11 is bonded to the surface of the compression rubber layer 12 on the inner circumferential side and is provided as a layer covering the surface of the compression rubber layer 12. Accordingly, the reinforcing fabric layer 11 is provided so as to cover the inner circumference of the power transmission belt 1 along the belt longitudinal direction. The reinforcing fabric layer 11 is bonded to the surfaces of the cog ridges 18a and the cog valleys 18b.

The reinforcing fabric layer 11 is configured to include at least one reinforcing fabric 19 covering the surface of the cog portion 18 along the belt longitudinal direction of the power transmission belt 1. In the present embodiment, the power transmission belt 1 provided with the reinforcing fabric layer 11 including only one reinforcing fabric 19 is exemplified. Without being limited to the form exemplified in the present embodiment, a form of a reinforcing fabric layer including plural sheets of the reinforcing fabric 19 in a laminated state may be executed.

The reinforcing fabric 19 is disposed throughout the entire circumference of the surface of the cog portion 18 along the belt longitudinal direction of the power transmission belt 1 and is bonded to the surfaces of the cog ridges 18a and the cog valleys 18b. The reinforcing fabric 19 is configured by using a seamlessly continuous woven fabric. As described below, the reinforcing fabric 19 is prepared in a reinforcing fabric preparing step including a cutting step, a bonding liquid immersing step, a wide angle processing step, and a drying step. As described below, the reinforcing fabric preparing step is configured to be a step in the method for manufacturing a power transmission belt.

As the material configuring the reinforcing fabric 19, for example, fibers such as cotton, polyethylene terephthalate (PET), nylon, and aramid are used. In the reinforcing fabric 19, fibers may be used alone or may be used in a combination thereof.

Both end portions of the reinforcing fabric 19 bonded to the surface of the cog portion 18 are joined to each other at only one joint portion 20 in the belt longitudinal direction. That is, as clearly illustrated in FIG. 1, the joint portion 20 at which the both end portions of the reinforcing fabric 19 are joined to each other is provided in only one place in the belt longitudinal direction.

The joint portion 20 is provided as a portion in which the both end portions of the reinforcing fabric 19 are joined to each other by being bonded in a state where the both end portions overlap. FIG. 4 is a cross-sectional view partially illustrating the cog portion 18 at a position corresponding to the joint portion 20. The joint portion 20 at which the both end portions of the reinforcing fabric 19 are joined to each other is disposed at a position corresponding to one cog ridge 18a (in other words, with reference to FIG. 4, the region indicated by Z1). That is, the joint portion 20 is disposed in a place other than the cog valley 18b configured to be the curved surface. The joint portion 20 is provided so as to extend in a substantially straight manner along the belt-width direction that is a direction orthogonal to the belt longitudinal direction. That is, a portion in which the both end portions of the reinforcing fabric 19 overlap each other and are joined to each other is provided so as to extend in a substantially straight manner along the belt-width direction. It is favorable that the joint portion 20 is provided in the cog ridge 18a (that is, the region Z1). It is more preferable that the joint portion 20 is provided in a region Z2 covering 50% of the cog depth d (height).

[Method for manufacturing Transmission Belt]

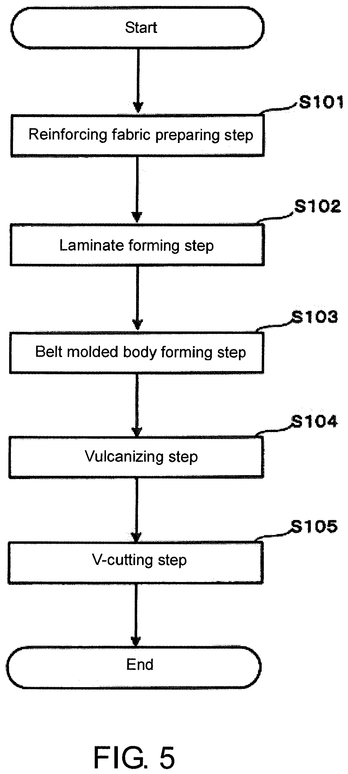

Subsequently, a method for manufacturing a power transmission belt 1 that is a raw edge V-belt, according to the embodiment will be described. FIG. 5 is a flow chart illustrating the method for manufacturing a power transmission belt 1. As illustrated in FIG. 5, the method for manufacturing a power transmission belt 1 is configured to include a reinforcing fabric preparing step S101, a laminate forming step S102, a belt molded body forming step S103, a vulcanizing step S104, and a V-cutting step S105. In manufacturing for the power transmission belt 1, first, the reinforcing fabric preparing step S101 is performed. Subsequently, the laminate forming step S102 is performed. Subsequently, the belt molded body forming step S103 is performed. Subsequently, the vulcanizing step S104 is performed. Finally, the V-cutting step S105 is performed, and the power transmission belt 1 is thereby manufactured.

[Reinforcing fabric Preparing Step]

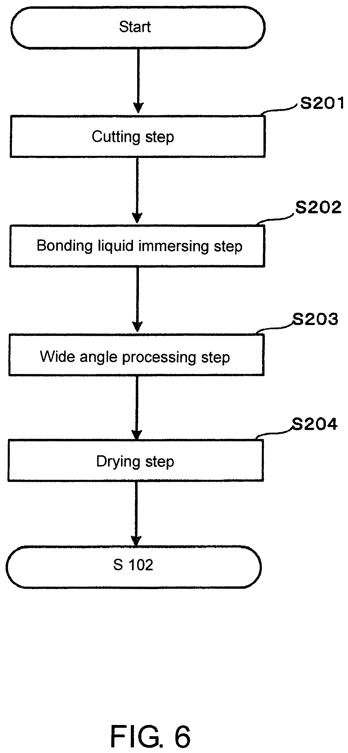

FIG. 6 is a flow chart illustrating the reinforcing fabric preparing step S101. The reinforcing fabric preparing step S101 is configured to be a step in which the reinforcing fabric 19 formed of seamlessly continuous fabric is prepared. As illustrated in FIG. 6, the reinforcing fabric preparing step S101 is configured to include a cutting step S201, a bonding liquid immersing step S202, a wide angle processing step S203, and a drying step S204.

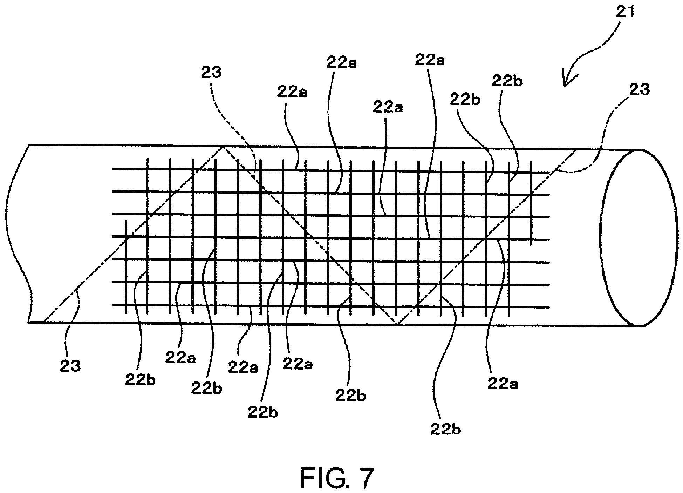

FIG. 7 is a view for describing the cutting step S201 and is a schematic view partially illustrating a bag-shaped woven fabric 21. In the cutting step S201, a plain-woven bag-shaped woven fabric 21 is cut. The bag-shaped woven fabric 21 is configured to be tubularly woven fabric configured to be woven from warp 22a and weft 22b. The bag-shaped woven fabric 21 is provided with the warp 22a extending in an axial direction of the tube shape and the weft 22b extending along the circumferential direction of the tube shape. In FIG. 7, the warp 22a and the weft 22b are schematically illustrated. As the fibers configuring the warp 22a and the weft 22b, for example, fibers such as cotton, polyethylene terephthalate (PET), nylon, and aramid are used. The fibers may be used alone or may be used by combining two or more kinds together.

In the cutting step S201, the bag-shaped woven fabric 21 is spirally cut with respect to the axial direction of the tube shape. That is, the bag-shaped woven fabric 21 is cut along an oblique direction with respect to the axial direction of the tube shape and also along an oblique direction with respect to the circumferential direction of the tube shape. In FIG. 7, a cutting line 23 at the time of spirally cutting the bag-shaped woven fabric 21 is indicated by a one-dot chain line and a dotted line. The cutting line 23 indicated by the one-dot chain line illustrates the cutting line shown on the front side in the drawing, and the cutting line 23 indicated by the dotted line schematically illustrates the cutting line shown on the rear side in the drawing.

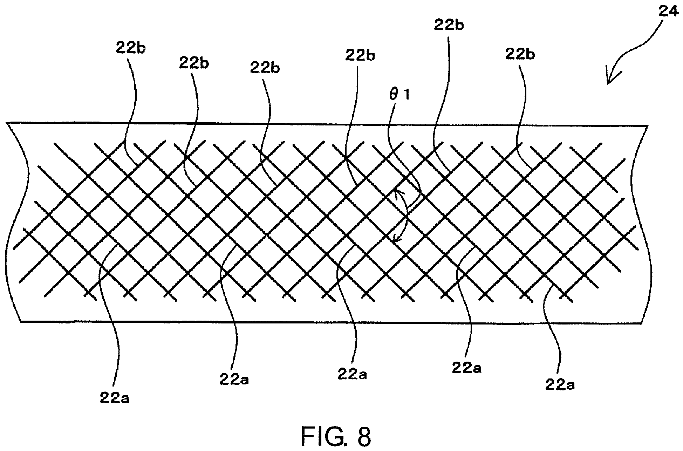

The bag-shaped woven fabric 21 is spirally cut along the cutting line 23. For example, the cutting line 23 is set to an angle inclined by 45 degrees with respect to a direction in which the warp 22a extends. FIG. 8 is a schematic view partially illustrating a belt-shaped fabric 24 prepared by spirally cutting the bag-shaped woven fabric 21 in the cutting step S201.

The belt-shaped fabric 24 is configured to be a seamlessly continuous woven fabric. The belt-shaped fabric 24 is configured to be a woven fabric in which the warp 22a and the weft 22b obliquely extend with respect to a longitudinal direction of the belt-shaped fabric 24. For example, the belt-shaped fabric 24 is configured to be a woven fabric in which the warp 22a and the weft 22b extend in a direction of 45 degrees with respect to the longitudinal direction of the belt-shaped fabric 24. That is, the belt-shaped fabric 24 is configured to be a woven fabric in which the warp 22a and the weft 22b intersect each other at an angle of 90 degrees.

When the cutting step S201 is completed and the belt-shaped fabric 24 is prepared, the bonding liquid immersing step S202 is subsequently performed. In the bonding liquid immersing step S202, the seamlessly continuous belt-shaped fabric 24 prepared in the cutting step S201 is immersed in bonding liquid. As the bonding liquid, for example, resorcinol formaldehyde latex (RFL), a rubber cement, and an epoxy resin are used. These may be used alone or may be used in a combination thereof.

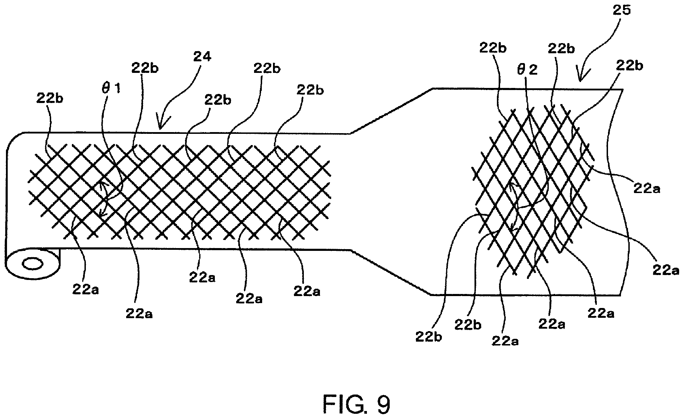

In the wide angle processing step S203, the belt-shaped fabric 24 which has gone through the bonding liquid immersing step S202 and to which the bonding liquid adheres is stretched in a width direction of the belt-shaped fabric 24 such that the length of the belt-shaped fabric 24 in the longitudinal direction is shortened, thereby performing the wide angle processing in which the intersection angle between the warp 22a and the weft 22b of the belt-shaped fabric 24 is widened. The width direction of the belt-shaped fabric 24 is a direction orthogonal to the longitudinal direction of the belt-shaped fabric 24. The intersection angle between the warp 22a and the weft 22b is an angle formed by the warp 22a and the weft 22b intersecting each other and is an angle on an open side when viewed in the longitudinal direction of the belt-shaped fabric 24 instead of being viewed in the width direction of the belt-shaped fabric 24. In FIG. 8, the intersection angle between the warp 22a and the weft 22b of the belt-shaped fabric 24 is illustrated by applying the reference sign of an angle θ1 (similar in FIG. 9).

FIG. 9 is a view for describing the wide angle processing step S203 and is a schematic view partially illustrating the belt-shaped fabric 24 and a wide angle woven fabric 25. The belt-shaped fabric 24 in a state of having the bonding liquid adheres thereto is subjected to the wide angle processing in which the intersection angle between the warp 22a and the weft 22b is widened by being shortened in length and being stretched in the width direction, thereby preparing the wide angle woven fabric 25. The wide angle woven fabric 25 is a seamlessly continuous woven fabric and is configured to be a woven fabric having an intersection angle between the warp 22a and the weft 22b greater than that of the belt-shaped fabric 24. FIG. 9 schematically illustrates a state where the belt-shaped fabric 24 is subjected to the wide angle processing and the wide angle woven fabric 25 is prepared from the belt-shaped fabric 24. The intersection angle between the warp 22a and the weft 22b of the wide angle woven fabric 25 is an angle formed by the warp 22a and the weft 22b intersecting each other in the wide angle woven fabric 25 and is an angle on an open side when viewed in the longitudinal direction of the wide angle woven fabric 25 instead of being viewed in the width direction of the wide angle woven fabric 25. In FIG. 9, the intersection angle between the warp 22a and the weft 22b of the wide angle woven fabric 25 is illustrated by applying the reference sign of an angle θ2.

In a state before the belt-shaped fabric 24 is subjected to the wide angle processing, the intersection angle between the warp 22a and the weft 22b is set to be 90 degrees. In contrast, the intersection angle between the warp 22a and the weft 22b of the wide angle woven fabric 25 prepared by performing the wide angle processing is set to be from 120 degrees to 140 degrees. It is more preferable that the intersection angle is from 130 degrees to 140 degrees. When the intersection angle between the warp 22a and the weft 22b is set to be from 120 degrees to 140 degrees in the state of the wide angle woven fabric 25, in a state of having gone through the last vulcanizing step S104 and being manufactured as the power transmission belt 1, the intersection angle between the warp 22a and the weft 22b in the reinforcing fabric 19 is from 110 degrees to 130 degrees. It is more preferable that the intersection angle is from 120 degrees to 130 degrees. The intersection angle between the warp 22a and the weft 22b of the reinforcing fabric 19 is an angle formed by the warp 22a and the weft 22b intersecting each other in the reinforcing fabric 19 and is an angle on an open side when viewed in the longitudinal direction of the reinforcing fabric 19 instead of being viewed in the width direction of the reinforcing fabric 19.

In the wide angle processing, the belt-shaped fabric 24 is stretched in the width direction so that the contraction ratio that is a ratio of the lengths of the belt-shaped fabric 24 before and after the wide angle processing is within a predetermined range. The contraction ratio is calculated through the following expression by marking a predetermined range of the woven fabric in a length direction before the wide angle processing and measuring the dimension of the predetermined range of the woven fabric before and after the wide angle processing. It is preferable that the contraction ratio ranges from 20% to 40%, and it is more preferable to range from 30% to 40%.

$$\text{Contraction ratio} = \{(\text{Dimension of a woven fabric (belt-shaped fabric 24) in}$$
$$\text{length direction before wide angle processing} - \text{Dimension of woven fabric (wide angle}$$
$$\text{woven fabric 25) in length direction after wide angle processing}) / \text{Dimension of woven}$$
$$\text{fabric (belt-shaped fabric) in length direction before wide angle processing}\} \times 100\,(\%)$$

In a case where the intersection angle between the warp 22a and the weft 22b in the reinforcing fabric 19 is smaller than 110 degrees, the reinforcing fabric 19 itself is unlikely to be stretched, and it is difficult for the reinforcing fabric 19 to expand and contract by sufficiently following the bending of the power transmission belt 1. Therefore, in a case where the intersection angle is smaller than 110 degrees, a crack is likely to be caused in the cog valley 18b. Meanwhile, there is a limit to the intersection angle between the warp 22a and the weft 22b which can be subjected to the wide angle processing in the wide angle processing step S203, and it is difficult to prepare a wide angle woven fabric 25 having an intersection angle being greater than 140 degrees. Therefore, it is difficult to prepare a reinforcing fabric 19 having an intersection angle between the warp 22a and the weft 22b being greater than 130 degrees. Accordingly, it is preferable that the intersection angle between the warp 22a and the weft 22b in the reinforcing fabric 19 is set to range from 110 degrees to 130 degrees.

In the drying step S204, the seamlessly continuous wide angle woven fabric 25 prepared by widening the intersection angle between the warp 22a and the weft 22b of the belt-shaped fabric 24 in the wide angle processing step S203 is dried. The wide angle woven fabric 25 is subjected to the wide angle processing while being in a state where the bonding liquid adheres thereto. In the drying step S204, the bonding liquid which has adhered to the wide angle woven fabric 25 is hardened. Accordingly, in regard to the warp 22a and the weft 22b of the wide angle woven fabric 25, while being in a state where the intersection angle between the warp 22a and the weft 22b is widened through the wide angle processing and the state thereof is retained, the bonding liquid is hardened and stuck. That is, the intersection angle between the warp 22a and the weft 22b is widened through the wide angle processing, and while being in a state where the state thereof is retained, the intersection angle thereof is fixed.

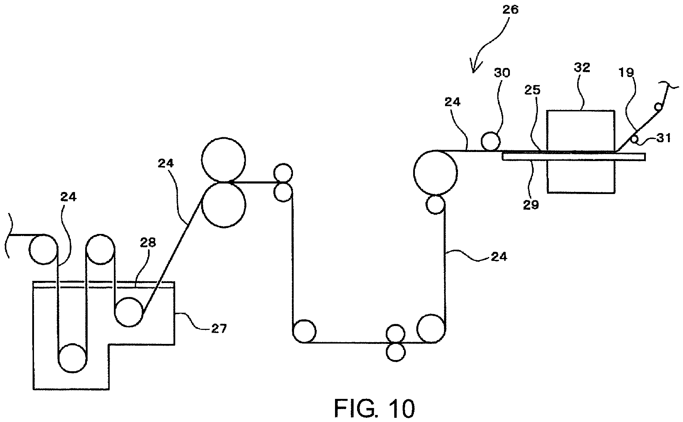

FIG. 10 is a schematic view of the apparatus layout of a manufacturing line 26 executing each process of the bonding liquid immersing step S202, the wide angle processing step S203, and the drying step S204. While the belt-shaped fabric 24 prepared in the cutting step S201 is transported and sent out by plural transportation rolls in the manufacturing line 26 having plural transportation rolls, each phase of the processing is performed, and the reinforcing fabric 19 of the power transmission belt 1 is prepared after going through the state of the wide angle woven fabric 25.

The manufacturing line 26 includes a bonding liquid tank 27 storing bonding liquid 28 used in the bonding liquid immersing step S202. As the bonding liquid 28, for example, RFL is used. The belt-shaped fabric 24 is immersed in the bonding liquid 28 stored in the bonding liquid tank 27 while being wound around and transported by the plural transportation rolls. That is, the belt-shaped fabric 24 is immersed in the bonding liquid 28 in the bonding liquid tank 27 during the process of being wound around and transported by the plural transportation rolls disposed in the bonding liquid tank 27. Accordingly, the bonding liquid immersing step S202 is performed.

The belt-shaped fabric 24 immersed in the bonding liquid 28 in the bonding liquid tank 27 is subsequently transported out of the bonding liquid tank 27. While the belt-shaped fabric 24 is wound around and transported by the plural transportation rolls in a state where the bonding liquid adheres thereto, the belt-shaped fabric 24 is sent toward a wide angle processing apparatus 29 and is transported above the wide angle processing apparatus 29.

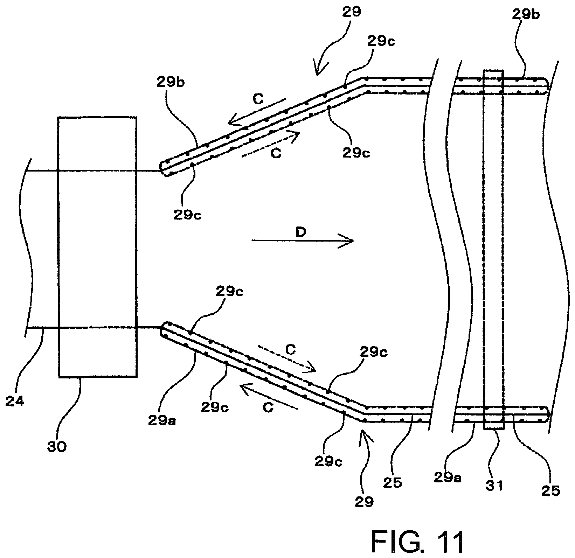

FIG. 11 is a schematic view illustrating the wide angle processing apparatus 29. The wide angle processing apparatus 29 is provided as an apparatus executing the wide angle processing step S203 and includes a pair of transportation mechanisms (29a, 29b). The pair of transportation mechanisms (29a, 29b) is disposed on both sides of the belt-shaped fabric 24 and the wide angle woven fabric 25 in the width direction and is provided as mechanisms transporting the belt-shaped fabric 24 and the wide angle woven fabric 25 while performing the wide angle processing thereof.

Each of the transportation mechanisms (29a, 29b) is provided as an endless transportation mechanism orbiting along a direction indicated by the arrow C in FIG. 11. The pair of transportation mechanisms (29a, 29b) is configured to be able to retain the both end portions of the belt-shaped fabric 24 and the wide angle woven fabric 25 in the width direction. More specifically, each of the transportation mechanisms (29a, 29b) is provided with plural pins 29c protruding upward. The pins 29c are individually disposed at positions so as to be able to pierce the belt-shaped fabric 24 and the wide angle woven fabric 25 at the end portions of the belt-shaped fabric 24 and the wide angle woven fabric 25 in the width direction.

When each of the transportation mechanisms (29a, 29b) orbits in the direction of the arrow C in the view, each of the pins 29c also orbits in the direction of the arrow C in the view. In each of the transportation mechanisms (29a, 29b), among the plural pins 29c, the pins 29c disposed below the belt-shaped fabric 24 and the wide angle woven fabric 25 pierce the belt-shaped fabric 24 and the wide angle woven fabric 25. Accordingly, the both end portions of the belt-shaped fabric 24 and the wide angle woven fabric 25 in the width direction are retained by the pair of transportation mechanisms (29a, 29b). Each of the transportation mechanisms (29a, 29b) is provided so as to be widened in the width direction of the belt-shaped fabric 24 and the wide angle woven fabric 25 and to extend throughout a downstream side in a transportation direction in which the belt-shaped fabric 24 and the wide angle woven fabric 25 are transported.

While being in a state where the bonding liquid adheres thereto, in a case where the belt-shaped fabric 24 is transported to an upstream side of the wide angle processing apparatus 29 by the plural transportation rolls, the belt-shaped fabric 24 is pressed to the wide angle processing apparatus 29 by a press roll 30 disposed above the belt-shaped fabric 24. Accordingly, the pins 29c disposed below the belt-shaped fabric 24 and the wide angle woven fabric 25 in each of the transportation mechanisms (29a, 29b) pierce the belt-shaped fabric 24 and the wide angle woven fabric 25. The both end portions of the belt-shaped fabric 24 and the wide angle woven fabric 25 in the width direction are retained by the pair of transportation mechanisms (29a, 29b).

In a state where the both end portions of the belt-shaped fabric 24 and the wide angle woven fabric 25 are retained, the pair of transportation mechanisms (29a, 29b) transports the belt-shaped fabric 24 and the wide angle woven fabric 25 in the longitudinal direction thereof while the belt-shaped fabric 24 and the wide angle woven fabric 25 are shortened in length and are stretched in the width direction. In FIG. 11, the direction in which the belt-shaped fabric 24 and the wide angle woven fabric 25 are transported along the longitudinal direction thereof (hereinafter, will also be referred to as "transportation direction") is indicated by the arrow D.

In the pair of transportation mechanisms (29a, 29b), the manufacturing line 26 is configured to have a speed of feeding the belt-shaped fabric 24 in the transportation direction faster than the speed component in the transportation direction in the moving speed of the pins 29c in a case where the pins 29c move while being widened in the width direction of the belt-shaped fabric 24 and the wide angle woven fabric 25 through the transportation direction. Accordingly, the manufacturing line 26 is configured such that the belt-shaped fabric 24 is widened in the width direction and contracts in the longitudinal direction, and the intersection angle between the warp 22a and the weft 22b is widened.

As described above, the belt-shaped fabric 24 is widened in the width direction and contracts in the longitudinal direction, and the intersection angle between the warp 22a and the weft 22b is widened. Then, the wide angle woven fabric 25 is prepared. When the wide angle woven fabric 25 is prepared, the wide angle woven fabric 25 is transported to a drying furnace 32 on the downstream side in the transportation direction by the transportation mechanisms (29a, 29b). The wide angle woven fabric 25 passes through the drying furnace 32 while being transported by the transportation mechanisms (29a, 29b). The transportation mechanisms (29a, 29b) are provided so as to extend to an exit of the drying furnace 32. In the vicinity of the exit of the drying furnace 32, a push-up roll 31 is disposed above the wide angle processing apparatus 29. After passing through the drying furnace 32, the wide angle woven fabric 25 is pushed upward by the push-up roll 31 disposed below the wide angle woven fabric 25 on the downstream side in the transportation direction with respect to the drying furnace 32. Accordingly, the wide angle woven fabric 25 is separated from the pins 29c.

The wide angle woven fabric 25 which has been subjected to the wide angle processing step S203 and sent out from the wide angle processing apparatus 29 is transported to the drying furnace 32. The drying furnace 32 is provided as a furnace executing the drying step S204. The wide angle woven fabric 25 which has been prepared by being subjected to the wide angle processing in a state where the bonding liquid adheres thereto is dried in a case of passing through the drying furnace 32 and being transported. Accordingly, the bonding liquid is hardened. While being in a state where the intersection angle between the warp 22a and the weft 22b is widened through the wide angle processing and the state thereof is retained, the intersection angle thereof is fixed and stuck by the hardened bonding liquid.

When the drying step S204 in the drying furnace 32 ends, the reinforcing fabric 19 is prepared. The reinforcing fabric 19 is cut into pieces having lengths required to configure the reinforcing fabric layer 11 of the power transmission belt 1 and is used as the reinforcing fabric 19 in the reinforcing fabric layer 11. In addition, in a case of being cut into pieces having the required lengths, the reinforcing fabric 19 is cut in a substantially straight manner along the width direction of the reinforcing fabric 19 that is a direction orthogonal to the longitudinal direction of the reinforcing fabric 19.

Here, preferable conditions in the above-described reinforcing fabric preparing step S101 will be further described. From the viewpoint of easily widening the intersection angle between the warp 22a and the weft 22b during the wide angle processing, the bag-shaped woven fabric 21 used for preparing the belt-shaped fabric 24 has the yarn density of 35 to 75 pieces/5 cm. That is, as the bag-shaped woven fabric 21, it is preferable to use woven fabric having the yarn density in which 35 to 75 pieces of the warp 22a per 5 cm are included along the circumferential direction of the tube shape and 35 to 75 pieces of the weft 22b per 5 cm are included along the axial direction of the tube shape.

In a case where the yarn density is excessively high, the gap of the yarn is narrow and the yarn is unlikely to move. Meanwhile, as the yarn density is lower and the gap of the yarn is widened, the yarn is likely to move. Therefore, the intersection angle between the warp 22a and the weft 22b is likely to be widened during the wide angle processing. However, in a case where the yarn density is excessively low, since the number of pieces of yarn per unit width or unit length of the woven fabric reduces, the strength of the woven fabric is weakened. Thus, in a case where the yarn density of the bag-shaped woven fabric 21 is set to 35 to 75 pieces/5 cm, while the strength of the woven fabric is sufficiently ensured, the wide angle processing can also be easily performed.

As the material of the base material of the bag-shaped woven fabric 21, from the viewpoint of reducing contraction of the woven fabric in the width direction caused due to heat in the drying step S204, it is preferable to use a material including fibers having a small degree of contraction caused due to heat. Particularly, since cotton fibers have a small degree of stretch, as the base material of the bag-shaped woven fabric 21, it is preferable to use a material including cotton.

As the bonding liquid used in the bonding liquid immersing step S202, it is preferable to use RFL or an epoxy-based bonding processing agent. Particularly, it is preferable to use RFL in which an initial compound of resorcin and formalin and rubber latex are mixed. When the RFL is used as the bonding liquid, with respect to the wide angle woven fabric 25 subjected to the wide angle processing in the wide angle processing step S203, the bonding liquid which has adhered to the wide angle woven fabric 25 can be efficiently hardened in the drying step S204 and can be firmly stuck. In addition, the RFL is also preferable in regard to the general usage as the bonding liquid.

In addition, the solid content concentration of the bonding liquid used in the bonding liquid immersing step S202 ranges from 2 to 26 mass%. In a case where the solid content concentration deviates from the above-described range and is excessively low, the sticking state of the wide angle woven fabric 25 subjected to the wide angle processing in the wide angle processing step S203 is likely to be insufficient. In addition, the bonding between the reinforcing fabric 19 and rubber of the compression rubber layer 12 is likely to be insufficient. In a case where the solid content concentration deviates from the above-described range and is excessively high, the woven fabric becomes stiff due to the hardened bonding liquid, and the bendability of the power transmission belt 1 is likely to be degraded.

In the wide angle processing step S203, as described above, in a case where the pins 29c retaining the both end portions of the belt-shaped fabric 24 in the width direction are widened in the width direction, the belt-shaped fabric 24 is stretched in the width direction. When the speed of feeding the belt-shaped fabric 24 is caused to be faster than the speed component in the transportation direction in the moving speed of the pins 29c, the belt-shaped fabric 24 contracts in the length direction and the intersection angle between the warp 22a and the weft 22b is widened. Therefore, in order to set the intersection angle between the warp 22a and the weft 22b to be the target angle (120 to 140 degrees), the stretching ratio of the belt-shaped fabric 24 in the width direction, the speed of feeding the belt-shaped fabric 24, and the moving speed of the pins 29c are required to be optimized.

The stretching ratio of the belt-shaped fabric 24 in the width direction can be changed by adjusting the gap between the pins 29c of the transportation mechanism 29a and the pins 29c of the transportation mechanism 29b and can be calculated based on a ratio of the width dimension of the woven fabric before and after the wide angle processing. That is, the stretching ratio thereof can be calculated through the following expression. Stretching ratio = Width dimension of wide angle woven fabric 25 ÷ Width dimension of belt - shaped 24 × 100 %

The stretching ratio calculated through the above expression is set to be from 130 to 140%. The speed of feeding the belt-shaped fabric 24 is set to range 1.5 to 2.5 times the speed component in the transportation direction in the moving speed of the pins 29c. Based on the stretching ratio conditions and the speed conditions, the intersection angle between the warp 22a and the weft 22b of the wide angle woven fabric 25 prepared by performing the wide angle processing can be set to be from 120 degrees to 140 degrees as targeted. As described above, in a case where the intersection angle between the warp 22a and the weft 22b is set to be from 120 degrees to 140 degrees in the state of the wide angle woven fabric 25, the intersection angle between the warp 22a and the weft 22b in the reinforcing fabric 19 is from 110 degrees to 130 degrees in a state of going through the last vulcanizing step S104 and being manufactured as the power transmission belt 1.

In the drying step S204, the wide angle woven fabric 25 subjected to the wide angle processing is dried at a high temperature in some degree, the bonding liquid which has adhered to wide angle woven fabric 25 is hardened, and the intersection angle between the warp 22a and the weft 22b widened through the wide angle processing can be fixed (stuck). However, in a case where the drying temperature is excessively high, the woven fabric deteriorates due to the heat. Meanwhile, in a case where the drying temperature is low in some degree, contraction of the wide angle woven fabric 25 in the width direction caused due to heat can be reduced. However, in a case where the drying temperature is excessively low, the bonding liquid is not sufficiently hardened, and the intersection angle between the warp 22a and the weft 22b is insufficiently fixed (stuck). From the viewpoint above, in the drying step S204, the drying temperature is set to be from 100 to 160°C. Accordingly, the intersection angle between the warp 22a and the weft 22b can be fixed (stuck), and deterioration of the woven fabric caused due to heat can also be prevented. Furthermore, contraction of the wide angle woven fabric 25 in the width direction caused due to heat can also be restrained.

When the drying step S204 ends, the reinforcing fabric preparing step S101 ends. Thereafter, before the laminate forming step S102 is performed, as necessary, a processing for improving the bonding properties between the reinforcing fabric 19 prepared in the reinforcing fabric preparing step S101 and the compression rubber layer 12 may be performed. Specifically, in order to improve the bonding properties between the reinforcing fabric 19 and the compression rubber layer 12, a processing for causing rubber to adhere to the reinforcing fabric 19 may be performed. As the processing thereof, for example, a processing of immersing the reinforcing fabric 19 in a rubber cement is performed, or a processing of anointing the reinforcing fabric 19 with a rubber is performed. Otherwise, a processing of laminating a thin rubber sheet on the reinforcing fabric 19 is performed.

[Laminate Forming Step]

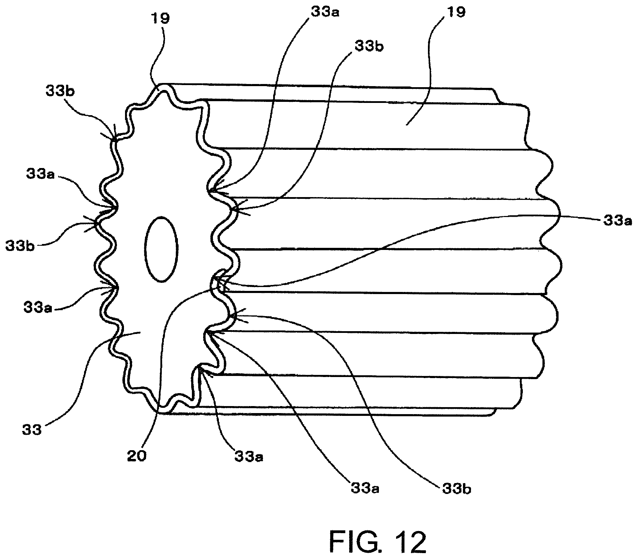

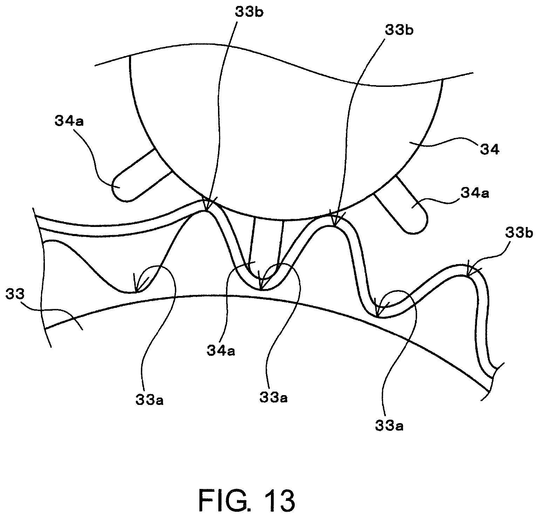

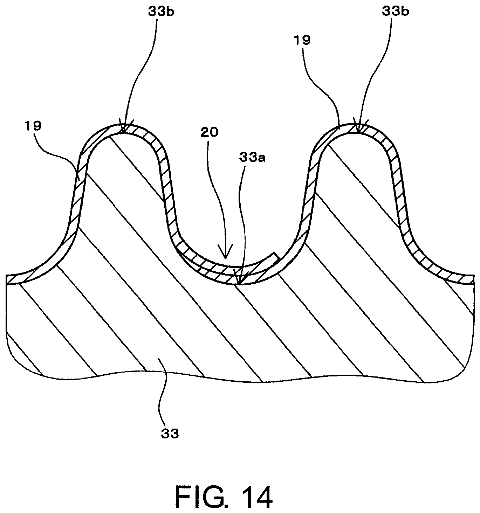

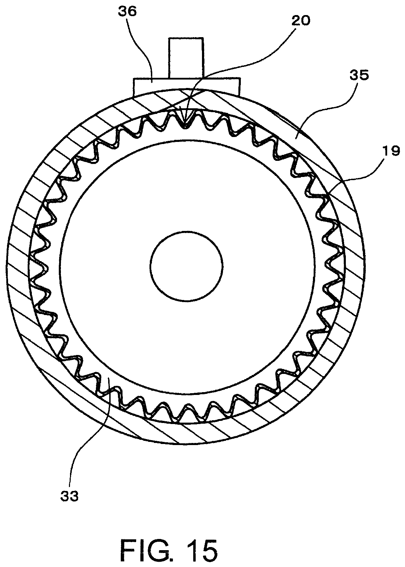

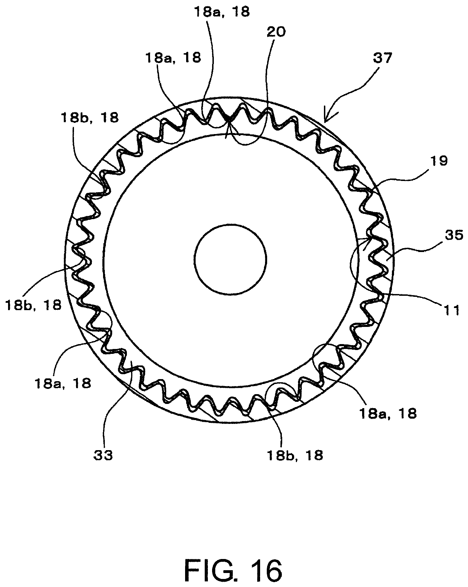

FIG. 12 to FIG. 16 are views for describing the laminate forming step S102. FIG. 12 is a schematic view illustrating a state where the reinforcing fabric 19 is disposed so as to be wound around an outer circumference of a die 33. FIG. 13 is a view for describing a step of winding the reinforcing fabric 19 around the outer circumference of the die 33. FIG. 14 is a cross-sectional view schematically illustrating a part of the outer circumference of the die 33 and a part of the reinforcing fabric 19 wound around the outer circumference of the die 33. FIG. 15 is a view schematically illustrating a state where an unvulcanized rubber sheet 35 that is a base material of the compression rubber layer 12 is disposed in the outer circumference of the die 33 having the reinforcing fabric 19 wound around. FIG. 16 is a view schematically illustrating a state where the reinforcing fabric 19 and the unvulcanized rubber sheet 35 are laminated in the outer circumference of the die 33 and an endless laminate 37 having the cog portion 18 provided in the unvulcanized rubber sheet 35 is formed. In FIG. 15 and FIG. 16, cross sections of the reinforcing fabric 19 and the unvulcanized rubber sheet 35 are illustrated, and the external shape of the die 33 is illustrated.

The laminate forming step S102 is configured to be a step in which the reinforcing fabric layer 11 including the reinforcing fabric 19 and the unvulcanized rubber sheet 35 for a compression rubber layer 12 are laminated and an endless laminate 37 provided with the cog portion 18 in the unvulcanized rubber sheet 35 thereof in which the cog ridges 18a and the cog valleys 18b are alternately arranged is formed. In the laminate forming step S102, as illustrated in FIG. 12, the reinforcing fabric 19 is disposed so as to be wound around the outer circumference of the die 33. For example, the die 33 is configured to be a die provided with groove portions 33a and ridge portions 33b which are alternately arranged in the outer circumference of a tubular main body portion.

The groove portions 33a are provided as grooved portions recessed inward in the outer circumference of the die 33 and are provided so as to extend along the axial direction of the die 33. The ridge portions 33b are provided as ridged portions bulging outward in the outer circumference of the die 33 and are provided so as to extend along the axial direction of the die 33. In a state where the reinforcing fabric 19 and the unvulcanized rubber sheet 35 are laminated and the laminate 37 provided with the cog portion 18 is formed in the outer circumference of the die 33, the groove portions 33a correspond to the cog ridges 18a, and the ridge portions 33b correspond to the cog valleys 18b. That is, the groove portions 33a form the cog ridges 18a, and the ridge portions 33b form the cog valleys 18b.

When the reinforcing fabric 19 (reinforcing fabric layer 11) is wound around the outer circumference of the die 33, a pinion roll 34 illustrated in FIG. 13 is used, for example. The pinion roll 34 is configured to be a roll provided with plural teeth 34a in the outer circumference. In the pinion roll 34, for example, each of the teeth 34a is provided so as to have a pin shape protruding radially outward from the pinion roll 34.

The die 33 and the pinion roll 34 are disposed in a state where the axial directions thereof are set parallel to each other. In a state where the reinforcing fabric 19 is disposed along the outer circumference of the die 33 and the teeth 34a of the pinion roll 34 are disposed so as to be able to respectively mesh with the groove portions 33a of the die 33, the die 33 and the pinion roll 34 rotate in directions opposite to each other. In this manner, in a case where the die 33 and the pinion roll 34 rotate in directions opposite to each other, the reinforcing fabric 19 is sequentially thrust into the groove portions 33a by the teeth 34a. Accordingly, as illustrated in FIG. 12, in a state where the outer surfaces of the groove portions 33a of the die 33 and the outer surfaces of the ridge portions 33b are in tight contact with each other, the reinforcing fabric 19 is disposed so as to be wound around the outer circumference of the die 33. The reinforcing fabric 19 is wound throughout the entire circumference of the die 33, and the longitudinal direction of the reinforcing fabric 19 corresponding to the circumferential direction of the outer circumference of the die 33 corresponds to the belt longitudinal direction of the power transmission belt 1.

In a case where the reinforcing fabric 19 is disposed so as to be wound around the outer circumference of the die 33, as illustrated in FIG. 12 and FIG. 14, the both end portions of the reinforcing fabric 19 in the longitudinal direction are disposed together in one groove portion 33a in an overlapping state. That is, the joint portion 20 at which the both end portions of the reinforcing fabric 19 are joined to each other is disposed in one groove portion 33a. The joint portion 20 is disposed along the groove portions 33a so as to extend in a substantially straight manner in the width direction of the reinforcing fabric 19. In this manner, since the joint portion 20 is disposed in one groove portion 33a, in a case where the laminate 37 is prepared, the joint portion 20 is disposed in one cog ridge 18a in the cog portion 18.

The reinforcing fabric 19 is disposed so as to be wound around the outer circumference of the die 33, and then, as illustrated in FIG. 15, the unvulcanized rubber sheet 35 that is the base material of the compression rubber layer 12 is disposed in the outer circumference of the die 33 having the reinforcing fabric 19 wound around. The unvulcanized rubber sheet 35 is disposed so as to cover the entire circumference of the die 33 along the outer circumference of the die 33. The both end portions of the unvulcanized rubber sheet 35 covering the outer circumference of the die 33 are heated by a hot press 36 and are pressurized, thereby being joined to each other, in a state of abutting each other.

The unvulcanized rubber sheet 35 is disposed in the outer circumference of the die 33 and the both end portions of the unvulcanized rubber sheet 35 are joined to each other, then the die 33 having the reinforcing fabric 19 and the unvulcanized rubber sheet 35 disposed in the outer circumference thereof is accommodated inside a vulcanizer (not illustrated) which is also used in the vulcanizing step S104, and patterning is performed. At this time, a rubber jacket that is a steam blocking member covers the outside of the die 33 having the reinforcing fabric 19 and the unvulcanized rubber sheet 35 disposed in the outer circumference. The unvulcanized rubber sheet 35, the reinforcing fabric 19, and the die 33 covered with the jacket are accommodated inside the vulcanizer. Inside the vulcanizer, the die 33 having the reinforcing fabric 19 and the unvulcanized rubber sheet 35 disposed in the outer circumference and being covered with the jacket is heated, and is also pressurized. Accordingly, the unvulcanized rubber sheet 35 is patterned with respect to the die 33 having the reinforcing fabric 19 disposed in the outer circumference. As a result, as illustrated in FIG. 16, the reinforcing fabric layer 11 including the reinforcing fabric 19 and the unvulcanized rubber sheet 35 for a compression rubber layer 12 are laminated, and the endless laminate 37 provided with the cog portion 18 in the unvulcanized rubber sheet 35 thereof in which the cog ridges 18a and the cog valleys 18b are alternately arranged is formed.

Since the laminate 37 is formed as described above, in the laminate forming step S102, the reinforcing fabric layer 11 is bonded to the surfaces of the cog ridges 18a and the cog valleys 18b in the laminate 37. In the laminate forming step S102, the reinforcing fabric 19 is disposed so as to cover the surface of the cog portion 18 along the circumferential direction of the laminate 37 corresponding to the belt longitudinal direction of the power transmission belt 1. In the laminate forming step S102, the both end portions of the reinforcing fabric 19 are joined to each other and are joined at only one place in the belt longitudinal direction (circumferential direction). In the laminate forming step S102, the joint portion 20 at which the both end portions of the reinforcing fabric 19 are joined to each other is disposed at a position corresponding to one cog ridge 18a. In the laminate forming step S102, the joint portion 20 is disposed so as to extend in a substantially straight manner along the belt-width direction (axial direction of the die 33) that is a direction orthogonal to the belt longitudinal direction (circumferential direction).

[Belt molded body forming step)

The laminate forming step S102 ends and the laminate 37 is formed, and then the belt molded body forming step S103 is subsequently performed. The belt molded body forming step S103 is configured to be a step in which another layer is laminated on the outer circumferential side of the laminate 37 and an unvulcanized belt molded body is formed.

More specifically, in the belt molded body forming step S103, in the outer circumference of the laminate 37 in a state of being disposed in the outer circumference of the die 33, an unvulcanized rubber sheet (not illustrated) that is the base material of the adhesion rubber layer 13, the spirally spun tension cord serving as the tension member 16, an unvulcanized rubber sheet (not illustrated) that is the base material of the tension rubber layer 14, and the upper surface reinforcing fabric 15 are laminated in this order. Accordingly, an unvulcanized belt molded body is formed.

[Vulcanizing Step]

The belt molded body forming step S103 ends, and then the vulcanizing step S104 is subsequently performed. The vulcanizing step S104 is configured to be a step in which a belt molded body formed in the belt molded body forming step S103 is vulcanized. In the vulcanizing step S104, in a state where the belt molded body is disposed in the outer circumference of the die 33, the outside thereof is further covered with a rubber jacket that is a steam blocking member. The belt molded body and the die 33 covered with the jacket is accommodated inside the vulcanizer (not illustrated). The belt molded body is vulcanized inside the vulcanizer.

[V-cutting Step]

The vulcanizing step S104 ends, and then the V-cutting step S105 is performed. When the vulcanizing step S104 is performed, the belt molded body is vulcanized, and a belt sleeve can be obtained. In the V-cutting step S105, cutting the belt sleeve prepared in the vulcanizing step S104 is performed by using a cutter so as to have a predetermined width such that the cross section perpendicular to the belt longitudinal direction becomes a cross section having a V-shape (trapezoid shape) along the belt longitudinal direction. When the V-cutting step S105 is completed, manufacturing the power transmission belt 1 is completed.

As described above, the power transmission belt 1 is manufactured by executing the method for manufacturing the power transmission belt illustrated in FIG. 5. That is, the power transmission belt 1 is manufactured by performing all of the steps of the reinforcing fabric preparing step S101, the laminate forming step S102, the belt molded body forming step S103, and the vulcanizing step S104.

[Examples]

Subsequently, Examples of the above-described power transmission belt 1 of the present embodiment (Examples of the present invention) will be described. As Examples of the power transmission belt 1 of the present embodiment, transmission belts according to Examples 1 to 27 were manufactured by varying the manufacturing conditions. The power transmission belts according to Examples 1 to 27 were manufactured based on the manufacturing method of the present embodiment described above. In addition, for the comparison with the power transmission belts according to Examples 1 to 27, transmission belts according to three Comparative Examples of Comparative Examples 1, 2, and 3 were also manufactured. With respect to the power transmission belts according to Comparative Examples 1, 2, and 3, and Examples 1 to 27, the below-described performance evaluation test was conducted.

In regard to the power transmission belts according to Examples 1 to 7 and the power transmission belts according to Comparative Examples (1, 2, and 3), Table 1 shows the list of the manufacturing conditions and the results of the performance evaluation test thereof. In regard to the power transmission belts according to Examples 8 to 17, Table 2 shows the list of the manufacturing conditions and the results of the performance evaluation test thereof. In regard to the power transmission belts according to Examples 18 to 27, Table 3 shows the list of the manufacturing conditions and the results of the performance evaluation test thereof.

[Table 1]

Table 1

| | | | Comp Ex. 1 | Comp Ex.2 | Comp Ex. 3 | Ex. 1 | Ex. 2 | Ex. 3 | Ex. 4 | Ex. 5 | Ex. 6 | Ex. 7 |
|---|---|---|---|---|---|---|---|---|---|---|---|---|
| Reinforcing fabric | Base material | | Plain-woven fabric | | | Bag-shaped woven fabric | | | | Bag-shaped woven fabric | | |
| | Material of spun yarn (warp and weft) | Spun yarn A | Mixed spun yarn of cotton/PET (cotton/PET=50/50) | | | Mixed spun yarn of cotton/PET (cotton/PET=50/50) | | | | Mixed spun yarn of cotton/PET (cotton/PET=50/50) | | |
| | | Spun yarn B | - | | | - | | | | - | | |
| | Stranded configuration of warp and weft | | Two-stranded yarn of spun yarn A (No. 20 count) | | | Two-stranded yarn of spun yarn A (No. 20 count) | | | | Two-stranded yarn of spun yarn A (No. 20 count) | | |
| | Wide angle processing method | | A-1 | | | A-2 | | | | A-2 | | |
| | Presence or absence of bias joint | | Present | | | Absent | | | | Absent | | |
| | Number of joint portions including perpendicular joint | | 2 | | | 1 | | | | 1 | | |
| Bonding liquid | Kinds | | RFL | | Epoxy | RFL | | Epoxy | RFL | RFL | | |
| | Solid content concentration (mass%) | | 2.8 | | | 7.0 | | | | 7.0 | | |
| Yarn density of warp and weft (pieces/5 cm) | | Before wide angle processing | 69 | 69 | 69 | 45 | 45 | 45 | 45 | 55 | 55 | 55 |
| | | After wide angle processing | 85 | 90 | 85 | 73 | 78 | 73 | 67 | 73 | 79 | 85 |
| Intersection angle of reinforcing fabric on surface of cog portion (degrees) | | | 120 | 130 | 120 | 120 | 130 | 120 | 110 | 110 | 120 | 130 |
| Running time until crack was generated in cog valley (hr) | | | 15 | 18 | 16 | 38 | 44 | 32 | 32 | 36 | 43 | 49 |

[Table 2]

Table 2

| | | | Ex. 8 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|---|---|
| Reinforcing fabric | Base material | | Bag-shaped woven fabric | | | | Bag-shaped woven fabric | | | Bag-shaped woven fabric | | |
| | Material of spun yarn (warp and weft) | Spun yarn A | Mixed spun yarn of cotton/PET (cotton/PET=50/50) | | | | Mixed spun yarn of cotton/PET (cotton/PET=50/50) | | | Cotton | PET | Meta-based aramid |
| | | Spun yarn B | - | | | | - | | | - | | |
| | Stranded configuration of warp and weft | | Two-stranded yarn of spun yarn A (No. 20 count) | | | | Three-stranded yarn of spun yarn A (No. 20 count) | | | Two-stranded yarn of spun yarn A (No. 20 count) | | |
| | Wide angle processing method | | A-2 | | | | A-2 | | | A-2 | | |
| | Presence or absence of bias joint | | Absent | | | | Absent | | | Absent | | |
| | Number of joint portions including perpendicular joint | | 1 | | | | 1 | | | 1 | | |
| Bonding liquid | Kinds | | RFL Epoxy RFL | | | | RFL | | | RFL | | |
| | Solid content concentration (mass%) | | 7.0 | | | | 7.0 | | | 7.0 | | |
| Yam density of warp and weft (pieces/5 cm) | | Before wide angle processing | 65 | 65 | 65 | 65 | 36 | 44 | 53 | 65 | 65 | 65 |
| | | After wide angle processing | 78 | 85 | 85 | 91 | 60 | 64 | 69 | 85 | 85 | 85 |
| Intersection angle of reinforcing fabric on outer surface of cog portion (degrees) | | | 110 | 120 | 120 | 130 | 120 | 120 | 120 | 120 | 120 | 120 |
| Running time until crack was generated in cog valley (hr) | | | 39 | 46 | 41 | 52 | 38 | 42 | 46 | 35 | 47 | 49 |

[Table 3]

Table 3

| | | | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|
| Reinforcing fabric | Base material | | Bag-shaped woven fabric | | | | | | | | | |
| | Material of spun yarn (warp and weft) | Spun yarn A | PET | | | | | | | | | |
| | | Spun yarn B | Meta-based aramid | | | | | | | | | |
| | Stranded configuration of warp and weft | | Mixed stranded yarn of spun yarn A (No. 40 count, two-stranded) and spun yarn B (No. 40 count, two-stranded) | | | | | | | | | |
| | Wide angle processing method | | A-2 | | | | | | | | | |
| | Presence or absence of bias joint | | Absent | | | | | | | | | |
| | Number of joint portions including perpendicular joint | | 1 | | | | | | | | | |
| Bonding liquid | Kinds | | RFL | | | RFL | | | RFL | | Epoxy | RFL |
| | Solid content concentration(mass%) | | 7.0 | | | 7.0 | | | 7.0 | | | |
| Yarn density of warp and weft (pieces/5 cm) | | Before wide angle processing | 45 | 45 | 45 | 55 | 55 | 55 | 65 | 65 | 65 | 65 |
| | | After wide angle processing | 67 | 73 | 78 | 73 | 79 | 85 | 78 | 85 | 85 | 91 |
| Intersection angle of reinforcing fabric on outer surface of cog portion (degrees) | | | 110 | 120 | 130 | 110 | 120 | 130 | 110 | 120 | 120 | 130 |
| Running time until crack was generated in cog valley (hr) | | | 35 | 41 | 46 | 39 | 46 | 51 | 42 | 49 | 41 | 54 |

In the power transmission belts according to Comparative Examples (1, 2, and 3), as the base material of the reinforcing fabric on the inner circumferential side, a plain-woven fabric was used. Meanwhile, in the power transmission belts according to Examples 1 to 27, as the base material of the reinforcing fabric, a woven fabric which was woven in a bag shape (bag-shaped woven fabric) was used. The yarn density of the warp and the weft of the woven fabric of the reinforcing fabric in the power transmission belt in each of Comparative Examples (1, 2, and 3) and each of Examples 1 to 27 was set as shown in Tables 1 to 3. In Comparative Examples (1, 2, and 3) and Examples 1 to 11, the warp and the weft were individually formed of two-stranded yarn that is yarn having the thickness of No. 20 count cotton mixed spun with cotton and PET. The conditions of the warp and the weft used in Examples 12 to 27 were set as shown in Tables 2 and 3.

The kinds of the bonding liquid and the solid content concentration of the bonding liquid used in a case of preparing the reinforcing fabric of the power transmission belt of each of Comparative Examples (1, 2, and 3) and each of Examples 1 to 27 were set as shown in Tables 1 to 3. "RFL" disclosed in Tables 1 to 3 was bonding liquid that is a bonding agent in which the initial condensate of resorcin and formalin, and rubber latex were mixed. "Epoxy" disclosed in Tables 1 to 3 was bonding liquid that is an epoxy-based bonding agent in which epoxy resin and a solvent were mixed. The drying temperature during drying processing for hardening the bonding liquid was set to 120°C in all of Comparative Examples (1, 2, and 3) and Examples 1 to 27.

As the wide angle processing method in a case of preparing the reinforcing fabric of the power transmission belt of each of Comparative Examples (1, 2, and 3) and each of Examples 1 to 27, as disclosed in Tables 1 to 3, a wide angle processing method of "A-1" or "A-2" was used. Here, "A-1" is a wide angle processing method performed with respect to the plain-woven fabric, and "A-2" is a wide angle processing method used in the wide angle processing step S203.

The wide angle processing method of "A-1" of widening the intersection angle between the warp and the weft of the plain-woven fabric was performed by performing the each of the following steps (1) to (3). (1) The plain-woven fabric was immersed in the bonding liquid such as the RFL, and the bonding liquid was caused to adhere to the plain-woven fabric. (2) In a state where the bonding liquid adhered thereto, both ends of the plain-woven fabric in the width direction were fixed by using fixing pins, and the woven fabric in its entirety was stretched in an oblique direction while being bent. Then, the plain-woven fabric was stretched due to the difference between the displacement magnitudes of the fixing pins on both sides (difference between the displacement magnitudes on the outer circumferential side and the inner circumferential side). (3) The stretched plain-woven fabric was dried, and the bonding liquid was hardened. By performing each of the steps (1) to (3) described above, a plain-woven fabric having a wide intersection angle in which the warp was tilted with respect to the longitudinal direction of the woven fabric (direction in which the warp extended) was obtained.

In addition, the reinforcing fabric of the power transmission belts according to Comparative Examples (1, 2, and 3) was prepared by cutting the plain-woven fabric prepared through the wide angle processing method of "A-1" and joining the cut pieces together. More specifically, from the plain-woven fabric obtained through the wide angle processing method of "A-1", plural pieces of fabric cut parallel to the central direction (bias direction) of the intersection angle between the warp and the weft thereof were prepared, and the plurality pieces of fabric were continuously joined along the bias direction. Accordingly, the reinforcing fabric (reinforcing fabric of the power transmission belts according to Comparative Examples (1, 2, and 3)) of which the bias direction became the longitudinal direction was prepared. Therefore, the reinforcing fabric of the power transmission belts according to Comparative Examples (1, 2, and 3) was provided with at least one or more joint portions (hereinafter, will be referred to as "bias joints") obliquely extending with respect to the belt longitudinal direction (circumferential direction of the power transmission belt). In addition, the both end portions of the reinforcing fabric of the power transmission belts according to Comparative Examples (1, 2, and 3) were joined together at the joint portion (hereinafter, will be referred to as "perpendicular joint") extending in the belt-width direction orthogonal to the belt longitudinal direction.

In addition, as disclosed in Table 1, in each of the power transmission belts according to Comparative Examples (1, 2, and 3), as the joint portion of the reinforcing fabric, the bias joint and the perpendicular joint were provided. Meanwhile, in each of the power transmission belts according to Examples 1 to 27, no bias joint was provided, and only the perpendicular joint that is a joint portion extending in a substantially straight manner along the belt-width direction was provided. The bias joint of each of the power transmission belts according to Comparative Examples (1, 2, and 3) was disposed so as to extend throughout cog ridges and cog valleys of a cog portion. The perpendicular joint of each of the power transmission belts according to Comparative Examples (1, 2, and 3) was disposed so as to correspond to the cog valley. Meanwhile, the perpendicular joint in the reinforcing fabric of the power transmission belt according to each of Examples (1, 2, and 3) was disposed at a position corresponding to one cog ridge.

As disclosed in Tables 1 to 3, the intersection angle between the warp and the weft of the reinforcing fabric on the surface of the cog portion of the power transmission belts according to Comparative Examples 1 and 3, and Examples 1, 3, 6, 9, 10, 12 to 17, 19, 22, 25, and 26 was set to 120 degrees. The intersection angle between the warp and the weft of the reinforcing fabric on the surface of the cog portion of the power transmission belts according to Comparative Example 2 and Examples 2, 7, 11, 20, 23, and 27 was set to 130 degrees. The intersection angle between the warp and the weft of the reinforcing fabric on the surface of the cog portion of the power transmission belts according to Examples 4, 5, 8, 18, 21, and 24 was set to be 110 degrees.

Table 4 shows the components included in the compression rubber layer 12 and the tension rubber layer 14 used in the power transmission belts according to Examples 1 to 27 and Comparative Examples (1, 2, and 3). Table 5 shows the components included in the adhesion rubber layer 13 used in the power transmission belts according to Examples 1 to 27 and Comparative Examples (1, 2, and 3).

[Table 4]

Table 4

| Material (parts by mass) | |
|---|---|
| Chloroprene rubber | 100 |
| Aramid short fiber [CONEX (average fiber length of 3 mm, average fiber diameter of 1 4 $\mu$m)] | 25 |
| Plasticizer ["RS-700" manufactured by ADEKA CORPORATION] | 5 |
| Magnesium oxide | 4 |
| Carbon black ["SEAST 3" manufactured by TOKAI CARBON CO., LTD.] | 40 |
| Antioxidant ("NONFLEX OD3" manufactured by SEIKO CHEMICAL CO., LTD.] | 4 |
| Zinc oxide | 5 |
| N,N-m-phenylenedimaleimide | 2 |
| Stearic acid | 1 |
| Sulfur | 0.5 |
| Total | 186.5 |

[Table 5]

Table 5

| Material (parts by mass) | |
|---|---|
| Chloroprene rubber | 100 |
| Plasticizer ["RS-700" manufactured by ADEKA CORPORATION] | 5 |
| Magnesium oxide | 4 |
| Silica ["Nipsil VN3" manufactured by TOSOH CORPORATION] | 30 |
| Carbon black ["SEAST 3" manufactured by TOKAI CARBON CO., LTD.] | 20 |
| Resorcin/formalin condensate | 2 |
| Antioxidant ["NONFLEX OD3" manufactured by SEIKO CHEMICAL CO., LTD.] | 4 |
| Zinc oxide | 5 |
| Vulcanizing accelerator [tetramethylthiuram disulfide (TMTD)] | 1 |
| Stearic acid | 2 |
| Hexamethoxymethylol melamine | 2 |
| Total | 175 |

In the power transmission belts according to Examples 1 to 27 and Comparative Examples (1, 2, and 3), after the drying processing, the wide angle woven fabric obtained through the wide angle processing of "A-1" or "A-2" was subjected to a processing for improving the bonding properties with respect to the compression rubber layer 12 (processing of immersing the wide angle woven fabric in rubber cement), thereby obtaining the reinforcing fabric layer 11 including only one wide angle woven fabric as the reinforcing fabric 19. As the base materials of the compression rubber layer 12 and the tension rubber layer 14, unvulcanized rubber sheets formed of rubber compositions shown in Table 4 were used. As the base material of the adhesion rubber layer 13, an unvulcanized rubber sheet formed of a rubber composition shown in Table 5 was used. As the tension cord serving as the tension member 16, a cord having the total denier of 6,000, in which PET fibers individually having denier of 1,000 were configured to be 2×3 stranded and were organized at the final twist coefficient of 3.0 and the first twist coefficient of 3.0, was subjected to common bonding processing and was used. As upper surface reinforcing fabric, the wide angle woven fabric used as the (lower surface) reinforcing fabric in Comparative Example 1 (plain-woven fabric subjected to the processing of "A-1") was used. The unvulcanized belt molded body was formed by using the materials described above. The belt molded body was vulcanized in the vulcanizer at the temperature of 160°C for 20 minutes and was subjected to V-cutting, thereby manufacturing a raw edge V-belt having the belt- circumferential length of 800 mm, the belt-upper width (width of the belt on the outer circumferential side) of 20 mm, the belt-lower width (width of the belt on the inner circumferential side) of 15.5 mm, the thickness of 9.0 mm, and the cog height of 4.0 mm.

With reference to Tables 1 to 3, in the power transmission belts according to Comparative Examples (1, 2, and 3), the solid content concentration of the bonding liquid used in a case of preparing the reinforcing fabric was 2.8%. Meanwhile, in the power transmission belts according to Examples 1 to 27, the solid content concentration of the bonding liquid was 7.0%. In this manner, the reason for varying the value of the solid content concentration of the bonding liquid will be described below.

In regard to the bonding liquid, in a case where the solid content concentration is excessively low, the sticking state of the wide angle woven fabric subjected to the wide angle processing is likely to be insufficient. In addition, the bonding between the reinforcing fabric and rubber of the compression rubber layer is likely to be insufficient. Meanwhile, in a case where the solid content concentration is excessively high, the woven fabric becomes stiff due to the hardened bonding liquid, and the bendability of the power transmission belt 1 is likely to be degraded. Therefore, it is preferable that the solid content concentration of the bonding liquid used in the bonding liquid immersing step ranges from 2 to 26mass% as described above in the reinforcing fabric preparing step.

In each of Comparative Examples (1, 2, and 3) performing the wide angle processing method of "A-1" of widening the intersection angle between the warp and the weft of the plain-woven fabric, even if the bonding liquid having relatively low solid content concentration of 2.8% was used, wide angle woven fabric having the target intersection angle (130 degrees in Comparative Examples 1 and 3, and 140 degrees in Comparative Example 2) could be obtained by hardening the bonding liquid through the drying processing at 120°C.

In contrast, in Examples 1 to 27 in which the wide angle processing method of "A-2" used in the wide angle processing step S203 was performed, in a case where the wide angle woven fabric was insufficiently stuck, even if the bonding liquid was hardened and stuck through the drying processing at 120°C, the intersection angle tended to be chronologically smaller (to return to the original state). Therefore, an investigation was performed through the following experiment regarding a relationship between the solid content concentration of the bonding liquid and the tendency in which the intersection angle reduced after the bonding liquid was hardened. Table 6 shows the result.

[Table 6]

Table 6

| Bonding liquid | Kinds | | RFL | | | | | | |
|---|---|---|---|---|---|---|---|---|---|
| | Solid content concentration (mass%) | | 2.0 | 4.0 | 6.0 | 7.0 | 14 | 20 | 26 |
| Intersection angle (degree) | Immediately after drying processing | | 130 | 130 | 130 | 130 | 130 | 130 | 130 |
| | after lapse of 24 hrs. | | 120 | 122 | 125 | 130 | 130 | 130 | 130 |

By using woven fabric which was woven in a bag shape (bag-shaped woven fabric) in which the warp and the weft were individually formed of two-stranded yarn that is yarn having the thickness of No. 20 count cotton mixed spun with cotton and PET (cotton / PET = 50 / 50) and using various types of RFL liquid having various types of solid content concentration as the bonding liquid, the wide angle processing of "A-2" used in the wide angle processing step S203 was performed. Then, with respect to the wide angle woven fabric obtained by hardening the bonding liquid through the drying processing at 120°C for 5 minutes, the intersection angle was individually measured immediately after the drying processing and after the wide angle woven fabric was left behind at a normal temperature for 24 hours.

In a case where the types of the bonding liquid having the solid content concentration of 2.0 mass%, 4.0 mass%, and 6.0 mass% were used with respect to the target intersection angle of 130 degrees, the intersection angle of 130 degrees was obtained immediately after the drying processing, but the intersection angle reduced after the lapse of 24 hours. When the solid content concentration was equal to or greater than 7.0 mass%, the intersection angle could maintain 130 degrees with no change from the time immediately after the drying processing to the time after the lapse of 24 hours. Based on this result, in Examples 1 to 27, the bonding liquid having the solid content concentration of 7.0 mass% was used.

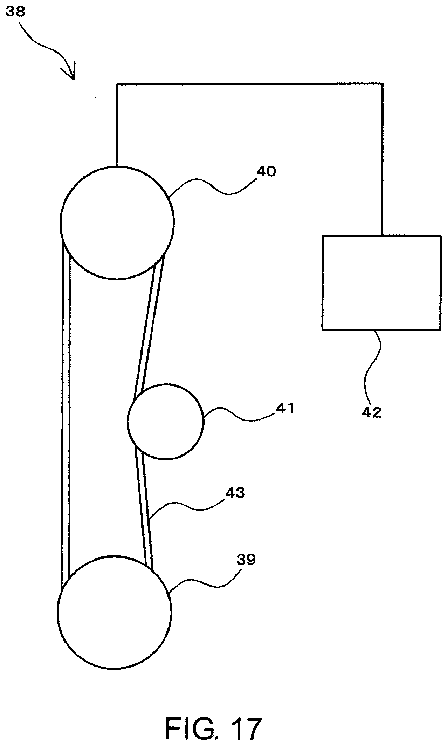

As the performance evaluation test for the power transmission belts according to Comparative Examples (1, 2, and 3) and Examples 1 to 27, a test of measuring the running time until a crack was caused in the cog valley in a state where the power transmission belt was wound around a drive pulley and a driven pulley and was caused to run was performed. FIG. 17 is a view schematically illustrating a layout of a testing apparatus 38 used in the performance evaluation test of the power transmission belt. The testing apparatus 38 was configured to be an apparatus including a drive pulley 39, a driven pulley 40, an idler pulley 41, an axial load applying mechanism 42, and the like. In FIG. 17, the power transmission belts according to Comparative Examples (1, 2, and 3) and Examples 1 to 27 that is subjects of the performance evaluation test were illustrated as a power transmission belt 43.

Both the diameters of the drive pulley 39 and the driven pulley 40 were set to be 100 mm. The diameter of the idler pulley 41 was set to be 80 mm. In the performance evaluation test, in a state where the power transmission belt 43 that is the test subject was wound around the drive pulley 39 and the driven pulley 40, in a case where the drive pulley 39 rotated, the power transmission belt 43 ran. The rotation frequency (rotation speed) of the drive pulley 39 while the power transmission belt 43 was caused to run was set to be 3,600 rpm. The axial load (deadweight) generated by the axial load applying mechanism 42 was set to be 130 kgf. The winding angle of the power transmission belt 43 with respect to the idler pulley 41 was set to 160 degrees. In addition, the ambient temperature while the performance evaluation test for the power transmission belt 43 was performed by the testing apparatus 38 was set to be 80°C.

Under the test conditions described above, the performance evaluation test was performed for the power transmission belt according to each of Comparative Examples (1, 2, and 3) and each of Examples 1 to 27, and the running time (hr) until a crack was generated in the cog valley was measured. As the results of the performance evaluation test, Tables 1 to 3 shows the running time (hr) until a crack was generated in the cog valley. When the running time until a crack was generated in the cog valley was equal to or longer than 20 hours, it was determined that there was no problem for the power transmission belt to serve as the raw edge V-belt (variable speed belt) used in the continuously variable transmission apparatus.

As shown in the results of the performance evaluation test in Tables 1 to 3, in all of the power transmission belts according to Comparative Examples (1, 2, and 3) using the reinforcing fabric obtained by performing the wide angle processing with respect to the plain-woven fabric, the running times until a crack was generated in the cog valley were equal to or less than 20 hours. As the reason thereof, it was considered that the perpendicular joint and the bias joint of the reinforcing fabric were present in the cog valley, stress applied to the cog valley in which the joints were present was concentrated in a non-uniform manner, excessive concentration of the stress was caused, and the reinforcing fabric did not follow expansion and contraction when the power transmission belt was bent. Therefore, it was considered that a crack was caused in the cog valley in an early stage. In contrast, in all of the power transmission belts according to Examples 1 to 27 of the present invention, the running times until a crack was generated in the cog valley significantly exceeded 20 hours that is the level having no problem to be used as the variable speed belt.

(A) Examination of Intersection Angle between Warp and Weft in Reinforcing fabric

Configurations of transmission belts according to Examples 4, 1, and 2 were the same except that the intersection angles between the warp and the weft in the reinforcing fabric were different from each other (with reference to Table 1, the intersection angle of the power transmission belt according to Example 4 was 110 degrees, the intersection angle of the power transmission belt according to Example 1 was 120 degrees, and the intersection angle of the power transmission belt according to Example 2 was 130 degrees). The running time until a crack was generated in the cog valley resulted so as to be longer as the intersection angle increased.

With reference to Table 1, it was found that the yarn density after the wide angle processing of Examples 4, 1, and 2 described above increased as the intersection angle increased. It was considered that the running time until a crack was generated in the cog valley became longer because the strength of the woven fabric was enhanced as the yarn density increased (that is, the number of pieces of yarn per unit width increased).

(B) Examination of Yarn Density

Configurations of the power transmission belts according to Examples 1, 6, and 9 were the same except that the yarn densities of the warp and the weft before the wide angle processing were different from each other (with reference to Tables 1 and 2, the yarn density of the power transmission belt before the wide angle processing according to Example 1 was 45 pieces/5 cm, the yarn density of the power transmission belt before the wide angle processing according to Example 6 was 55 pieces/5 cm, and the yarn density of the power transmission belt before the wide angle processing according to Example 9 was 65 pieces/5 cm). The running time until a crack was generated in the cog valley resulted so as to be longer as the yarn density before the wide angle processing increased. It was considered that the running time until a crack was generated in the cog valley became longer because the strength of the woven fabric was enhanced as the yarn density before the wide angle processing increased (that is, the number of pieces of yarn per unit width increased).

(C) Examination of Thickness of Yarn

Configurations of the power transmission belts according to Examples 1 and 13 were substantially the same except that the thicknesses of the warp and the weft were different from each other (with reference to Tables 1 and 2, the warp and the weft of the power transmission belt according to Example 1 were two-stranded yarn that is yarn having the thickness of No. 20 count mixed spun with cotton and PET, and the warp and the weft of the power transmission belt according to Example 13 were three-stranded yarn that is yarn having the thickness of No. 20 count mixed spun with cotton and PET). Similarly, configurations of the power transmission belts according to Examples 6 and 14 were also substantially the same except that the thicknesses of the warp and the weft were different from each other. As it was found from the comparison result of Examples 1 and 13, and the comparison result of Examples 6 and 14, it could be ascertained that the running time until a crack was generated in the cog valley became longer by increasing the thickness of the yarn.

When the power transmission belt according to Example 12 and the power transmission belt according to Example 1 were compared, the power transmission belt according to Example 12 had the lower yarn density before the wide angle processing. However, the running time until a crack was generated in the cog valley was equal to that of the power transmission belt according to Example 1. As the reason thereof, it was considered that even if the power transmission belt according to Example 12 had the narrow gap between the yarn and the yarn due to the thick yarn and had the low yarn density, since the yarn was thick, the running time until a crack was generated in the cog valley consequently became equal to that of the power transmission belt according to Example 1.

(D) Examination of Material of Yarn

Configurations of transmission belts according to Examples 9, 15, 16, 17, and 25 were the same except that the materials of the warp and the weft were different from each other. Specifically, the yarn used in the power transmission belt according to Example 9 was mixed spun yarn of cotton and PET, the yarn used in the power transmission belt according to Example 15 was cotton spun yarn, the yarn used in the power transmission belt according to Example 16 was PET spun yarn, the yarn used in the power transmission belt according to Example 17 was meta-based aramid spun yarn, and the yarn used in the power transmission belt according to Example 25 was mixed stranded yarn of PET spun yarn and meta-based aramid spun yarn.

The comparison result of the running times until a crack was generated in the cog valley of Examples 9, 15, 16, 17, and 25 was as follows: Example 15 (cotton, 35 hours) < Example 9 (cotton/PET, 46 hours) < Example 16 (PET, 47 hours) < Example 17 (meta-based aramid, 49 hours) = Example 25 (meta-based aramid/PET, 49 hours).

The PET and the meta-based aramid had the same level of the strength and the modulus of elasticity. However, the meta-based aramid had more excellent heat resistance and dimensions stability. Meanwhile, in a case of being compared to the PET and the meta-based aramid, even if the cotton had lower strength and modulus of elasticity, the cotton was generally used. In regard to the aspect of the cost, a relationship of cotton < PET < meta-based aramid was established. The material of the yarn used in the reinforcing fabric could be separately used depending on the required quality and cost.

With reference to Table 3, from the results of Examples 18 to 27, similar to Examples 1 to 11 (mixed spun yarn of cotton and PET), even in a case of using mixed stranded yarn of PET spun yarn and meta-based aramid spun yarn as the warp and the weft, it could be ascertained that the running time until a crack was generated in the cog valley became longer as the yarn density and the intersection angle increased.

[Effect of Present Embodiment]

As described above, according to the present embodiment, the both end portions of the reinforcing fabric 19 covering the surface of the cog portion 18 along the belt longitudinal direction are joined to each other at only one joint portion 20 in the belt longitudinal direction. The joint portion 20 provided in only one place in the reinforcing fabric 19 is disposed at a position corresponding to one cog ridge 18a. Therefore, the joint portion 20 of the reinforcing fabric 19 is certainly disposed in the cog ridge 18a and is prevented from being disposed in the cog valley 18b.

Thus, according to the present embodiment, the joint portion 20 of the reinforcing fabric 19 disposed on the surface of the cog portion 18 is prevented from being present in the cog valley 18b. Therefore, stress is restrained from being concentrated in the cog valley 18b in a non-uniform manner and resulting in excessive concentration of the stress, and uniformity of stress in the cog valley 18b can be achieved. The reinforcing fabric 19 is also restrained from being insufficient to follow expansion and contraction when the power transmission belt 1 is bent, and improvement of the resistance to fatigue from bending can also be achieved. Accordingly, even in a case where the power transmission belt 1 is used under a heavy-load environment, a crack can be restrained from being caused in the cog valley 18b in an early stage and improvement of the durability life can be achieved. That is, it is possible to realize a high durability in a case of being used under a heavy-load environment.

Therefore, according to the present embodiment, it is possible to provide the power transmission belt 1 in which even in a case of being used under a heavy-load environment, a crack can be restrained from being caused in the cog valley 18b in an early stage and a high durability can be realized, and the method for manufacturing the power transmission belt 1.

In addition, according to the present embodiment, since only one joint portion 20 is contained in the power transmission belt 1, compared to a case where plural joint portions are contained in the power transmission belt, the durability of the power transmission belt can be ensured.

In the present embodiment, the joint portion 20 of the reinforcing fabric 19 is provided so as to extend in a substantially straight manner along the belt-width direction. Therefore, a part of the joint portion 20 of the reinforcing fabric 19 disposed in the cog ridge 18a is prevented from escaping from the cog ridge 18a and being disposed in the cog valley 18b. That is, the joint portion of the reinforcing fabric 19 is prevented from extending at an oblique angle (bias angle) with respect to the belt longitudinal direction (circumferential direction of the power transmission belt 1) and is reliably disposed in the cog ridge 18a. Therefore, according to the present embodiment, the joint portion 20 can be more reliably disposed in only the cog ridge 18a.

As in the present embodiment, in a case where the intersection angle between the warp 22a and the weft 22b viewed in the belt longitudinal direction is set to be 110 degrees or more and 130 degrees or less, the reinforcing fabric 19 including the warp 22a and the weft 22b can sufficiently follow the bending of the power transmission belt 1 and can expand and contract. Accordingly, the durability of the reinforcing fabric 19 can be further enhanced.

According to the present embodiment, since other layers (specifically, the unvulcanized rubber sheet that is the base material of the adhesion rubber layer 13, the plural tension cords, the unvulcanized rubber sheet that is the base material of the tension rubber layer 14, and the upper surface reinforcing fabric 15) are laminated on an opposite side (outer circumferential side) to the cog portion 18 in the laminate 37, it is possible to manufacture the power transmission belt 1 having an appropriate configuration.

According to the present embodiment, when the reinforcing fabric 19 of the power transmission belt 1 is prepared, while the belt-shaped fabric 24 to which the bonding liquid adheres is stretched in the width direction and the intersection angle between the warp 22a and the weft 22b is widened, since the belt-shaped fabric 24 is stretched in the width direction such that the length in the longitudinal direction is shortened, the continuous wide angle woven fabric 25 having the widened intersection angle can be easily prepared. In addition, according to the present embodiment, the hardening processing of the bonding liquid is performed by drying the wide angle woven fabric 25 of which the intersection angle is widened while having the bonding liquid that has adhered thereto. Therefore, the bonding liquid is promptly hardened in a state of retaining a desired intersection angle by the bonding liquid, and the intersection angle can be fixed. When the reinforcing fabric 19 is prepared, the desired intersection angle can be efficiently retained by performing processing of bonding and processing of widening the intersection angle approximately at the same time.

As in the present embodiment, in a case where the belt-shaped fabric 24 to which the bonding liquid adheres is subjected to the wide angle processing such that the intersection angle between the warp 22a and the weft 22b viewed in the belt longitudinal direction is 120 degrees or more and 140 degrees or less, the intersection angle between the warp 22a and the weft 22b included in the reinforcing fabric 19 after the vulcanizing step becomes an intersection angle (in the case of the present embodiment, 110 degrees or more and 130 degrees or less) slightly smaller than an angle ranging from 120 degrees to 140 degrees. When the intersection angle between the warp 22a and the weft 22b included in the reinforcing fabric 19 after the vulcanizing step is set to be 110 degrees or more and 130 degrees or less, the reinforcing fabric 19 including the warp 22a and the weft 22b can sufficiently follow the bending of the power transmission belt 1 and can expand and contract. Accordingly, the durability of the reinforcing fabric 19 can be further enhanced.

[Modification Examples]

Hereinbefore, the embodiment of the present invention has been described. However, the present invention is not limited to the embodiment described above and can be variously changed and executed within the scope disclosed in Claims. For example, modification examples may be executed as follows.

(1) In the embodiment described above, description is given based on an example of a form in which the reinforcing fabric layer is disposed on the surface of the compression rubber layer on the inner circumferential side and the upper surface reinforcing fabric is disposed on the surface of the tension rubber layer on the outer circumferential side. However, the embodiment may be executed in a different manner. A form in which the reinforcing fabric layer is disposed on the surface of the compression rubber layer on the inner circumferential side and the upper surface reinforcing fabric is not disposed on the surface of the tension rubber layer on the outer circumferential side may be executed.

(2) In the embodiment described above, description is given based on an example of a form in which one reinforcing fabric is included in the reinforcing fabric layer on the surface of the compression rubber layer on the inner circumferential side. However, the embodiment may be executed in a different manner. A form in which two or more reinforcing fabric are included in the reinforcing fabric layer on the surface of the compression rubber layer on the inner circumferential side may be executed. In this case, the plural reinforcing fabric are laminated and disposed, and are disposed throughout the entire circumference along the belt longitudinal direction.

(3) In the embodiment described above, description is given based on an example of a form in which the cog portion is provided in only the compression rubber layer on the inner circumferential side. However, the embodiment may be executed in a different manner. A form in which the cog portion is also provided in the tension rubber layer on the outer circumferential side may be executed.

(4) In the embodiment described above, description is given based on an example of a form in which the joint portion of the reinforcing fabric is provided as a portion joined by being bonded in a state where the both end portions of the reinforcing fabric overlap each other. However, the embodiment may be executed in a different manner.

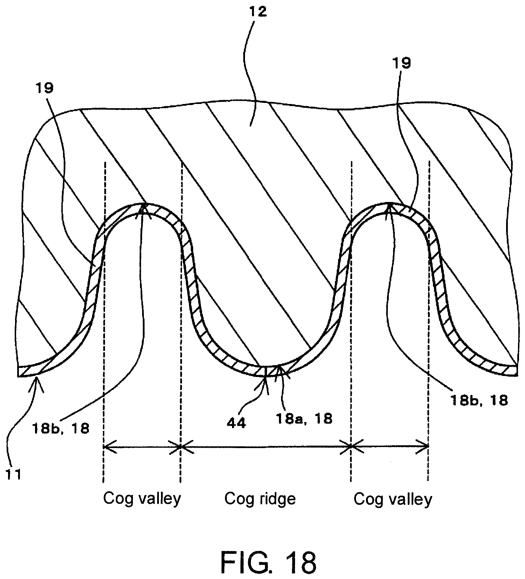

FIG. 18 is a view for describing a modification example of a joint portion of reinforcing fabric and is a cross-sectional view partially illustrating a cog portion and the reinforcing fabric. FIG. 18 is illustrated as a cross-sectional view corresponding to FIG. 4 of the above-described embodiment. In FIG. 18, the same reference signs are applied to the elements corresponding to those in the above-described embodiment. As illustrated in FIG. 18, a joint portion 44 on which the both end portions of the reinforcing fabric 19 are joined to each other is provided as a portion joined by being bonded in a state where the both end portions of the reinforcing fabric 19 abut each other. Such a form of the joint portion 44 may be executed.

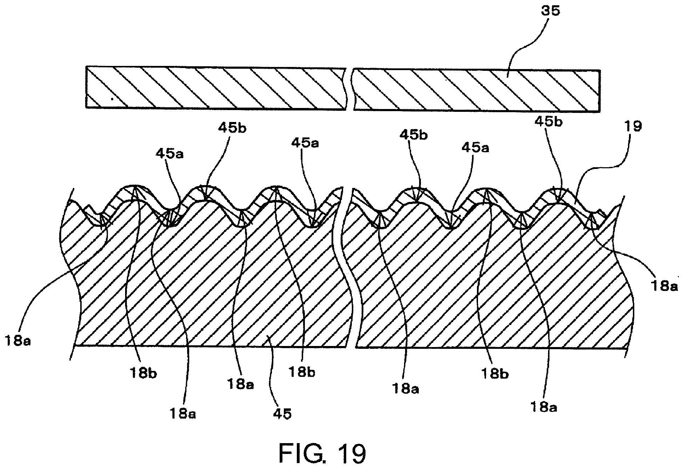

(5) In the embodiment described above, description is given based on an example of a form in which as the laminate forming step, the reinforcing fabric 19 is first wound around in a state of being in tight contact with the groove portions 33a and the surfaces of the ridge portions 33b along the outer circumference of the die 33, the unvulcanized rubber sheet 35 is subsequently patterned in the outer circumference, and the endless laminate 37 is formed. However, the embodiment may be executed in a different manner. For example, the laminate forming step according to the modification example illustrated in FIG. 19 to FIG. 21 may be executed.

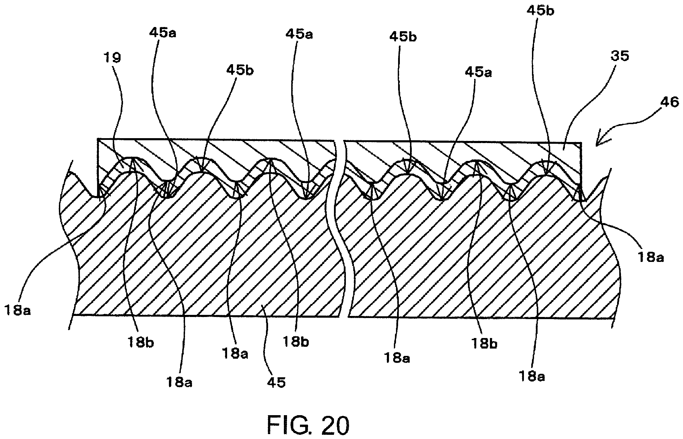

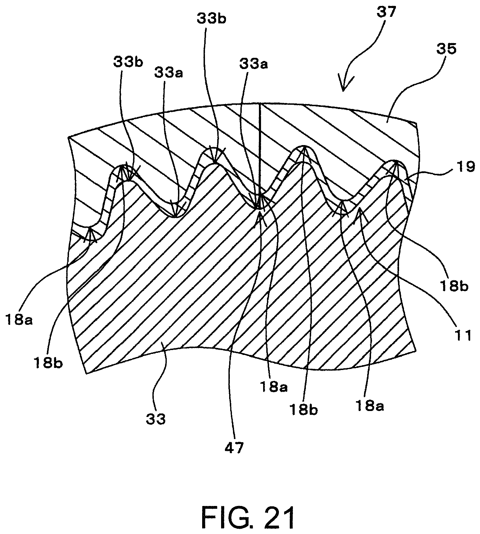

FIG. 19 to FIG. 21 are views for describing the modification example of the laminate forming step. FIG. 19 is a cross-sectional view schematically illustrating the reinforcing fabric 19, the unvulcanized rubber sheet 35, and a cog forming die 45. FIG. 20 is a cross-sectional view schematically illustrating a state where patterning is performed on the surface of the cog forming die 45 and the cog portion 18 is formed in the unvulcanized rubber sheet 35. FIG. 21 is a view schematically illustrating a part of a cross section in a state where the endless laminate 37 is formed in the outer circumference of the die 33. In FIG. 19 to FIG. 21, the same reference signs are applied to the elements corresponding to those in the above-described embodiment. In addition, in the description of the modification example below, description will be given by quoting the same reference signs for the elements corresponding to those in the above-described embodiment.

In the laminate forming step according to the modification example, in order to improve the bonding properties with respect to the compression rubber layer 12, the reinforcing fabric 19 to which a rubber material adheres is patterned with respect to the cog forming die 45 (refer to FIG. 19). When the reinforcing fabric 19 is patterned with respect to the cog forming die 45, a pinion roll or the like is used, for example. When the reinforcing fabric 19 is patterned with respect to the cog forming die 45, the unvulcanized rubber sheet 35 for a compression rubber layer 12 is disposed on the reinforcing fabric 19. As illustrated in FIG. 20, the reinforcing fabric 19 and the unvulcanized rubber sheet 35 in a laminated state are patterned by the cog forming die 45. Accordingly, in a state where the reinforcing fabric 19 and the unvulcanized rubber sheet 35 are laminated, a cog pad 46 in which the cog portion 18 is formed in the unvulcanized rubber sheet 35 is prepared.

For example, the cog forming die 45 is configured to be a plate-shaped die in which groove portions 45a and ridge portions 45b are provided so as to be alternately arranged on the surface. The groove portions 45a are provided as grooved portions recessed on the surface of the cog forming die 45. The ridge portions 45b are provided as ridged portions bulging on the surface of the cog forming die 45. In a state where the reinforcing fabric 19 and the unvulcanized rubber sheet 35 are laminated and the cog pad 46 provided with the cog portion 18 is formed, the groove portions 45a correspond to the cog ridges 18a, and the ridge portions 45b correspond to the cog valleys 18b. That is, the groove portions 45a form the cog ridges 18a, and the ridge portions 45b form the cog valleys 18b.

In the above-described modification example, description is given based on an example of a form in which only the reinforcing fabric 19 is first patterned with respect to the cog forming die 45, the unvulcanized rubber sheet 35 is subsequently disposed from above the reinforcing fabric 19, and patterning of the cog portion 18 is performed. However, the embodiment may be executed in a different manner. A form in which the reinforcing fabric 19 and the unvulcanized rubber sheet 35 are laminated and the cog portion 18 is patterned in the state thereof with respect to the unvulcanized rubber sheet 35 by the cog forming die 45 may be executed.

The cog pad 46 in which the reinforcing fabric 19 and the unvulcanized rubber sheet 35 are laminated and which is provided with the cog portion 18 is prepared, and then the both end portions of the cog pad 46 are cut. At this time, each of the both end portions of the cog pad 46 is cut in a central portion of the cog ridge 18a (refer to FIG. 20).

The cog pad 46 of which the both end portions are cut in the central portion of the cog ridge 18a is detached from the cog forming die 45 and is disposed so as to be wound around the outer circumference of the die 33. At this time, the cog pad 46 is disposed so as to be wound around the outer circumference of the die 33 such that the cog ridges 18a are fitted in the groove portions 33a and the ridge portions 33b are fitted in the cog valleys 18b. The cut surfaces of the both end portions of the cog pad 46 cut in the central portion of the cog ridge 18a abut and are joined to each other.

As a result, as illustrated in FIG. 21, the reinforcing fabric layer 11 including the reinforcing fabric 19 and the unvulcanized rubber sheet 35 for a compression rubber layer 12 are laminated, and the endless laminate 37 provided with the cog portion 18 in the unvulcanized rubber sheet 35 thereof in which the cog ridges 18a and the cog valleys 18b are alternately arranged is formed. When the both end portions of the cog pad 46 abut and are joined to each other, and the laminate 37 is formed, the both end portions of the unvulcanized rubber sheet 35 are joined together, and the both end portions of the reinforcing fabric 19 are also joined together. Accordingly, a joint portion 47 on which the both end portions of the reinforcing fabric 19 are joined to each other is also formed. In addition, the joint portion 47 is disposed in one groove portion 33a. In the laminate 37, the joint portion 47 is disposed in one cog ridge 18a in the cog portion 18.

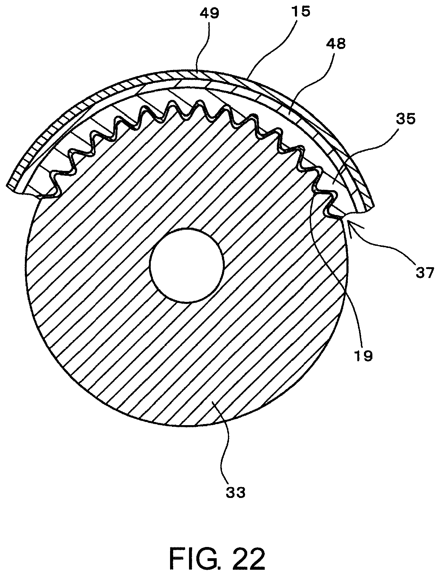

FIG. 22 is a view for describing a belt molded body forming step, which is performed after the laminate forming step illustrated in FIG. 19 to FIG. 21 is performed, and is a view schematically illustrating a state where in the outer circumference of the die 33, plural unvulcanized rubber sheets (48, 49) are further layered in the outer circumference of the endless laminate 37.

When the laminate forming step illustrated in FIG. 19 to FIG. 21 ends and the laminate 37 is formed in the outer circumference of the die 33, the plural unvulcanized rubber sheets (48, 49) are further layered in the outer circumference of the laminate 37. More specifically, in the outer circumference of the laminate 37, the unvulcanized rubber sheet 48 that is the base material of the adhesion rubber layer 13 and plural tension cords, the unvulcanized rubber sheet 49 that is the base material of the tension rubber layer 14, and the upper surface reinforcing fabric 15 are laminated in this order. Accordingly, the unvulcanized belt molded body is formed.

When the belt molded body forming step illustrated in FIG. 22 ends, the vulcanizing step is subsequently performed. In the vulcanizing step, in a state where the above-described belt molded body is disposed in the outer circumference of the die 33 and is covered with a jacket, the belt molded body is accommodated inside a vulcanizer (not illustrated) together with the die 33. The belt molded body is vulcanized inside the vulcanizer. When vulcanizing is completed, similar to the above-described embodiment, the V-cutting step is performed, and manufacturing the power transmission belt is completed.

(6) In the embodiment described above, description has been given by exemplifying the power transmission belt 1 provided with one joint portion 20. However, the embodiment is not limited thereto. Specifically, the power transmission belt may be configured to be provided with two or more joint portions. Even in this case, each of the joint portions is provided in the cog ridge and is not provided in the cog valley. Even in the power transmission belt having a configuration as the present modification example, similar to the case of the embodiment, even in a case of being used under a heavy-load environment, a crack can be restrained from being caused in the cog valley 18b in an early stage and a high durability can be realized.

(7) In the embodiment described above, description has been given by exemplifying the joint portion 20 which is provided so as to extend along a direction substantially orthogonal to the belt longitudinal direction. However, the embodiment is not limited thereto. Specifically, the joint portion may be provided so as to extend in an oblique direction with respect to the belt longitudinal direction. Even in this case, the joint portion is provided in the cog ridge and is not provided in the cog valley. Even in the power transmission belt having a configuration as the present modification example, similar to the case of the embodiment, even in a case of being used under a heavy-load environment, a crack can be restrained from being caused in the cog valley 18b in an early stage and a high durability can be realized.

The present invention has been described in detail and with reference to the specific aspect. It is clear for those skilled in the art that various changes and modifications can be added without departing from the gist and the scope of the present invention.

This application claims priority based on Japanese Patent Application No. 2015-038873, filed on February 27, 2015, and Japanese Patent Application No. 2016-029759, filed on February 19, 2016, the contents of which are incorporated herein by reference.

Industrial Applicability

The present invention can be widely applied to a power transmission belt, a method for manufacturing a power transmission belt, a reinforcing fabric, and a method for manufacturing a reinforcing fabric.

Reference Signs List

| | |
|---|---|
| 1 | POWER TRANSMISSION BELT |
| 11 | REINFORCING FABRIC LAYER |
| 12 | COMPRESSION RUBBER LAYER |
| 18 | COG PORTION |
| 18a | COG RIDGE |
| 18b | COG VALLEY |
| 19 | REINFORCING FABRIC |
| 20 | JOINT PORTION |

**Claims**

1. A method for manufacturing a reinforcing fabric (19) for a power transmission belt (1) comprising: a compression rubber layer (12) that is provided on an inner circumferential side; a cog portion (18) that is provided in at least the compression rubber layer and has cog ridges (18a) and cog valleys (18b) alternately arranged along a belt longitudinal direction; and a reinforcing fabric layer (11) that covers a surface of the cog portion, included in the reinforcing fabric layer (11), both end portions of which are joined to each other at only at least one joint portion (20) in the belt longitudinal direction, and in which the joint portion is disposed at only a position corresponding to the cog ridge, wherein the method for manufacturing the reinforcing fabric comprises:

   a cutting step; a bonding liquid immersing step; a wide angle processing step; and a drying step, wherein,
   in the cutting step, a bag-shaped woven fabric (21) configured by weaving a warp (22a) extending along an axial direction and a weft (22b) extending along a circumferential direction is spirally cut with respect to the axial direction, the bag-shaped woven fabric having a yarn density of 35 to 75 pieces/5 cm,
   in the bonding liquid immersing step, a belt-shaped fabric (24) prepared by spirally cutting the bag-shaped woven fabric is immersed in a bonding liquid, the bonding liquid having a solid content concentration that ranges from 2 to 26 mass%,
   in the wide angle processing step, the belt-shaped fabric to which the bonding liquid adheres is stretched in a width direction, a stretching ratio of the belt-shaped fabric is set to be 130 to 140 % and speed of feeding the belt-shaped fabric is set to range 1.5 to 2.5 times the speed component in the transportation direction of the moving speed of pins (29c) of a wide angle processing apparatus (29), and
   in the drying step, a wide angle woven fabric (25) obtained in the wide angle processing step is dried and the bonding liquid is hardened, a drying temperature is set to be from 100 to 160 °C.

2. A method for manufacturing a power transmission belt (1) comprising: a compression rubber layer (12) that is provided on an inner circumferential side; a cog portion (18) that is provided in at least the compression rubber layer and has cog ridges (18a) and cog valleys (18b) alternately arranged along a belt longitudinal direction; and a reinforcing fabric layer (11) that covers a surface of the cog portion, wherein the method for manufacturing a power transmission belt comprises:

a reinforcing fabric preparing step of preparing a reinforcing fabric (19) according to the method of claim 1;
a laminate forming step of forming an endless laminate in which the reinforcing fabric layer including at least one reinforcing fabric and an unvulcanized rubber sheet for the compression rubber layer are laminated and the cog portion is provided in the unvulcanized rubber sheet;
a belt molded body forming step of forming an unvulcanized belt molded body from the laminate; and
a vulcanizing step of vulcanizing the belt molded body,
wherein in the laminate forming step,
the reinforcing fabric layer is bonded to surfaces of the cog ridges and the cog valleys in the laminate,
the reinforcing fabric is disposed so as to cover the surface of the cog portion along the belt longitudinal direction,
both end portions of the reinforcing fabric are joined to each other at only at least one joint portion in the belt longitudinal direction,
the joint portion is disposed at only a position corresponding to the cog ridge.

3. The method for manufacturing a power transmission belt (1) according to claim 2, wherein the joint portion is contained only one.

4. The method for manufacturing a power transmission belt (1) according claim 2 or 3, wherein the joint portion is disposed so as to extend in a substantially straight manner along a direction substantially orthogonal to the belt longitudinal direction.

5. The method for manufacturing a power transmission belt (11) according to any one of claims 2 to 4,
wherein in the belt molded body forming step, another layer is laminated on an opposite side to the cog portion in the laminate.

6. The method for manufacturing a power transmission belt according to claim 1,
wherein in the wide angle processing step, a wide angle processing is performed so that the belt-shaped fabric to which the bonding liquid adheres has an intersection angle between the warp and the weft viewed in the belt longitudinal direction being 120 degrees or more and 140 degrees or less.

7. The method for manufacturing a power transmission belt according to any one of claims 2 to 5,
wherein the joint portion is joined by being bonded in a state where both end portions of the reinforcing fabric abut each other.

8. The method for manufacturing a power transmission belt according to any one of the preceding claims, wherein the stretching ratio = the width dimension of wide angle woven fabric (25) ÷ the width dimension of belt-shaped fabric (24) x 100 (%).

**Patentansprüche**

1. Verfahren zur Herstellung eines Verstärkungsgewebes (19) für einen Treibriemen (1), umfassend: eine Kompressionsgummischicht (12), die auf einer inneren Umfangsseite vorgesehen ist; einen Zahnbereich (18), der zumindest in der Kompressionsgummischicht vorgesehen ist und Zahnstege (18a) und Zahntäler (18b) aufweist, die abwechselnd entlang einer Riemenlängsrichtung angeordnet sind; und eine Verstärkungsgewebeschicht (11), die eine Oberfläche des Zahnbereichs bedeckt, die in der Verstärkungsgewebeschicht (11) eingeschlossen ist, deren beide Endabschnitte nur an mindestens einem Verbindungsabschnitt (20) in Riemenlängsrichtung miteinander verbunden sind, und bei der der Verbindungsabschnitt nur an einer Position angeordnet ist, die dem Zahnsteg entspricht, wobei das Verfahren zur Herstellung des Verstärkungsgewebes Folgendes umfasst:

einen Schneideschritt; einen Bindemitteltauchschritt; einen Weitwinkelverarbeitungsschritt; und einen Trocknungsschritt, wobei
im Schneideschritt ein sackförmiges Gewebe (21), das durch Weben einer Kette (22a), die sich entlang einer axialen Richtung erstreckt, und eines Schusses (22b), der sich entlang einer Umfangsrichtung erstreckt, ausgebildet ist, spiralförmig in Bezug auf die axiale Richtung geschnitten wird, wobei das sackförmige Gewebe eine Garndichte von 35 bis 75 Stück/5 cm aufweist,
im Bindemitteltauchschritt ein durch spiralförmiges Schneiden des sackförmigen Gewebes hergestelltes bandförmiges Gewebe (24) in eine Bindemittelflüssigkeit eingetaucht wird, wobei die Bindemittelflüssigkeit eine Feststoffkonzentration im Bereich von 2 bis 26 Massenprozent aufweist,

im Weitwinkelverarbeitungsschritt das bandförmige Gewebe, an dem die Bindemittelflüssigkeit haftet, in einer Breitenrichtung gestreckt wird, ein Streckverhältnis des bandförmigen Gewebes auf 130 bis 140 % eingestellt wird und die Vorschubgeschwindigkeit des bandförmigen Gewebes auf das 1,5- bis 2,5-fache der Geschwindigkeitskomponente in der Transportrichtung der Bewegungsgeschwindigkeit von Stiften (29c) einer Weitwinkelverarbeitungsvorrichtung (29) eingestellt wird, und

in dem Trocknungsschritt ein in dem Weitwinkelverarbeitungsschritt erhaltenes Weitwinkelgewebe (25) getrocknet und die Bindemittelflüssigkeit gehärtet wird, eine Trocknungstemperatur auf 100 bis 160 °C eingestellt wird.

2. Verfahren zur Herstellung eines Treibriemens (1), umfassend: eine Kompressionsgummischicht (12), die auf einer inneren Umfangsseite vorgesehen ist; einen Zahnbereich (18), der in mindestens der Kompressionsgummischicht vorgesehen ist und Zahnstege (18a) und Zahntäler (18b) aufweist, die abwechselnd entlang einer Riemenlängsrichtung angeordnet sind; und eine Verstärkungsgewebeschicht (11), die eine Oberfläche des Zahnbereichs bedeckt, wobei das Verfahren zur Herstellung eines Treibriemens Folgendes umfasst:

einen Schritt zur Herstellung eines Verstärkungsgewebes, bei dem ein Verstärkungsgewebe (19) gemäß dem Verfahren nach Anspruch 1 hergestellt wird;

einen Laminatbildungsschritt zur Bildung eines Endloslaminats, bei dem die Verstärkungsgewebeschicht, die mindestens ein Verstärkungsgewebe einschließt, und eine unvulkanisierte Gummibahn für die Kompressionsgummischicht laminiert werden und der Zahnbereich in der unvulkanisierten Gummibahn vorgesehen ist;

einen Riemenformkörperbildungsschritt des Bildens eines unvulkanisierten Riemenformkörpers aus dem Laminat; und

einen Vulkanisierungsschritt des Vulkanisierens des Riemenformkörpers,

wobei im Laminatbildungsschritt

die Verstärkungsgewebeschicht mit den Oberflächen der Zahnstege und der Zahntäler im Laminat verbunden ist,

das Verstärkungsgewebe so angeordnet ist, dass es die Oberfläche des Zahnbereichs entlang der Riemenlängsrichtung bedeckt,

die beiden Endabschnitte des Verstärkungsgewebes nur an mindestens einem Verbindungsabschnitt in Riemenlängsrichtung miteinander verbunden sind,

der Verbindungsabschnitt nur an einer Position angeordnet ist, die dem Zahnsteg entspricht.

3. Verfahren zur Herstellung eines Treibriemens (1) nach Anspruch 2,
wobei der Verbindungsabschnitt nur ein einziges Mal enthalten ist.

4. Verfahren zur Herstellung eines Treibriemens (1) nach Anspruch 2 oder 3,
wobei der Verbindungsabschnitt so angeordnet ist, dass er sich im Wesentlichen gerade entlang einer Richtung erstreckt, die im Wesentlichen orthogonal zur Riemenlängsrichtung ist.

5. Verfahren zur Herstellung eines Treibriemens (11) nach einem der Ansprüche 2 bis 4,
wobei in dem Riemenformkörperbildungsschritt eine weitere Schicht auf einer dem Zahnbereich im Laminat gegenüberliegenden Seite laminiert wird.

6. Verfahren zur Herstellung eines Treibriemens nach Anspruch 1,
wobei in dem Weitwinkelverarbeitungsschritt eine Weitwinkelverarbeitung durchgeführt wird, so dass das bandförmige Gewebe, an dem die Bindemittelflüssigkeit haftet, einen Schnittwinkel zwischen der Kette und dem Schuss in Riemenlängsrichtung gesehen von 120 Grad oder mehr und 140 Grad oder weniger aufweist.

7. Verfahren zur Herstellung eines Treibriemens nach einem der Ansprüche 2 bis 5,
wobei der Verbindungsabschnitt dadurch verbunden wird, dass er in einem Zustand verbunden wird, in dem beide Endabschnitte des Verstärkungsgewebes aneinander anliegen.

8. Verfahren zur Herstellung eines Treibriemens nach einem der vorhergehenden Ansprüche, wobei
das Streckverhältnis = das Breitenmaß des Weitwinkelgewebes (25) - das Breitenmaß des bandförmigen Gewebes (24) x 100 (%).

**Revendications**

1. Procédé de fabrication d'un tissu de renfort (19) pour une courroie (1) de transmission de puissance comprenant :

une couche de caoutchouc de compression (12) qui est située sur un côté circonférentiel intérieur ; une partie dentée (18) qui est située dans au moins la couche de caoutchouc de compression et présente des arêtes de dent (18a) et des creux de dent (18b) agencés en alternance le long d'une direction longitudinale de courroie ; et une couche de tissu de renfort (11) qui recouvre une surface de la partie dentée, incluse dans la couche de tissu de renfort (11), dont les deux parties d'extrémité sont jointes l'une à l'autre seulement au niveau d'au moins une partie de jonction (20) dans la direction longitudinale de courroie, et dans laquelle la partie de jonction est disposée à seulement une position correspondant à l'arête de dent,

dans lequel le procédé de fabrication du tissu de renfort comprend :

une étape de découpe ; une étape d'immersion dans un liquide de liaison ; une étape de traitement grand angle ; et une étape de séchage, dans lequel,

à l'étape de découpe, un tissu tissé (21) en forme de sac configuré en tissant une chaîne (22a) s'étendant le long d'une direction axiale et une trame (22b) s'étendant le long d'une direction circonférentielle est découpé en spirale par rapport à la direction axiale, le tissu tissé en forme de sac présentant une densité de fil de 35 à 75 pièces/5 cm,

à l'étape d'immersion dans un liquide de liaison, un tissu (24) en forme de courroie préparé en découpant en spirale le tissu tissé en forme de sac est immergé dans un liquide de liaison, le liquide de liaison présentant une concentration de teneur en solides qui se trouve dans la plage allant de 2 à 26 % en masse,

à l'étape de traitement grand angle, le tissu en forme de courroie auquel adhère le liquide de liaison est étiré dans une direction de largeur, un rapport d'étirement du tissu en forme de courroie est réglé pour être de 130 à 140 % et la vitesse d'acheminement du tissu en forme de courroie est réglée pour se trouver dans la plage allant de 1,5 à 2,5 fois la composante de vitesse dans la direction de transport de la vitesse de déplacement de tiges (29c) d'un appareil de traitement grand angle (29), et

à l'étape de séchage, un tissu tissé grand angle (25) obtenu à l'étape de traitement grand angle est séché et le liquide de liaison est durci, une température de séchage est réglée pour aller de 100 à 160 °C.

2. Procédé de fabrication d'une courroie (1) de transmission de puissance comprenant : une couche de caoutchouc de compression (12) qui est située sur un côté circonférentiel intérieur ; une partie dentée (18) qui est située dans au moins la couche de caoutchouc de compression et présente des arêtes de dent (18a) et des creux de dent (18b) agencés de façon alternée le long d'une direction longitudinale de courroie ; et une couche de tissu de renfort (11) qui recouvre une surface de la partie dentée,

dans lequel le procédé de fabrication d'une courroie de transmission de puissance comprend :

une étape de préparation de tissu de renfort consistant à préparer un tissu de renfort (19) selon le procédé de la revendication 1 ;

une étape de formation de stratifié consistant à former un stratifié sans fin dans lequel la couche de tissu de renfort incluant au moins un tissu de renfort et une feuille de caoutchouc non vulcanisé pour la couche de caoutchouc de compression sont stratifiées et la partie dentée est située dans la feuille de caoutchouc non vulcanisé ;

une étape de formation de corps moulé de courroie consistant à former un corps moulé de courroie non vulcanisé à partir du stratifié ; et

une étape de vulcanisation consistant à vulcaniser le corps moulé de courroie,

dans lequel à l'étape de formation de stratifié,

la couche de tissu de renfort est liée à des surfaces des arêtes de dent et des creux de dent dans le stratifié,

le tissu de renfort est disposé de manière à recouvrir la surface de la partie dentée le long de la direction longitudinale de courroie,

les deux parties d'extrémité du tissu de renfort sont jointes l'une à l'autre seulement au niveau d'au moins une partie de jonction dans la direction longitudinale de courroie,

la partie de jonction est disposée seulement à une position correspondant à l'arête de dent.

3. Procédé de fabrication d'une courroie (1) de transmission de puissance selon la revendication 2, dans lequel une seule partie de jonction est contenue.

4. Procédé de fabrication d'une courroie (1) de transmission de puissance selon la revendication 2 ou la revendication 3, dans lequel la partie de jonction est disposée de manière à s'étendre d'une manière sensiblement droite le long d'une direction sensiblement orthogonale à la direction longitudinale de courroie.

5. Procédé de fabrication d'une courroie (11) de transmission de puissance selon l'une quelconque des revendications 2 à 4,
dans lequel à l'étape de formation de corps moulé de courroie, une autre couche est stratifiée sur un côté opposé à la partie dentée dans le stratifié.

6. Procédé de fabrication d'une courroie de transmission de puissance selon la revendication 1,
dans lequel à l'étape de traitement grand angle, un traitement grand angle est mis en oeuvre de telle sorte que le tissu en forme de courroie auquel adhère le liquide de liaison présente un angle d'intersection entre la chaîne et la trame vu dans la direction longitudinale de courroie de 120 degrés ou plus et 140 degrés ou moins.

7. Procédé de fabrication d'une courroie de transmission de puissance selon l'une quelconque des revendications 2 à 5,
dans lequel la partie de jonction est jointe en étant liée dans un état où les deux parties d'extrémité du tissu de renfort viennent en butée l'une contre l'autre.

8. Procédé de fabrication d'une courroie de transmission de puissance selon l'une quelconque des revendications précédentes, dans lequel
le rapport d'étirement = la dimension de largeur du tissu tissé grand angle (25) - la dimension de largeur du tissu (24) en forme de courroie x 100 (%).

FIG. 1

FIG. 2

FIG. 3

FIG. 4

```
            ┌─────────────────────────┐
            │          Start          │
            └─────────────────────────┘
                         │
                         ▼                    S101
            ┌─────────────────────────┐
            │ Reinforcing fabric      │
            │ preparing step          │
            └─────────────────────────┘
                         │
                         ▼                    S102
            ┌─────────────────────────┐
            │  Laminate forming step  │
            └─────────────────────────┘
                         │
                         ▼                    S103
            ┌─────────────────────────┐
            │ Belt molded body        │
            │ forming step            │
            └─────────────────────────┘
                         │
                         ▼                    S104
            ┌─────────────────────────┐
            │    Vulcanizing step     │
            └─────────────────────────┘
                         │
                         ▼                    S105
            ┌─────────────────────────┐
            │     V-cutting step      │
            └─────────────────────────┘
                         │
                         ▼
            ┌─────────────────────────┐
            │           End           │
            └─────────────────────────┘
```

FIG. 5

```
                    ┌──────────────────────┐
                    │        Start         │
                    └──────────┬───────────┘
                               │
                               ▼                    S201
                    ┌──────────────────────┐
                    │     Cutting step     │
                    └──────────┬───────────┘
                               │
                               ▼                    S202
                    ┌──────────────────────┐
                    │ Bonding liquid immersing step │
                    └──────────┬───────────┘
                               │
                               ▼                    S203
                    ┌──────────────────────┐
                    │ Wide angle processing step │
                    └──────────┬───────────┘
                               │
                               ▼                    S204
                    ┌──────────────────────┐
                    │     Drying step      │
                    └──────────┬───────────┘
                               │
                               ▼
                    ┌──────────────────────┐
                    │        S 102         │
                    └──────────────────────┘
```

FIG. 6

FIG. 7

FIG. 9

44

FIG. 10

FIG. 11

FIG. 12

FIG. 13

FIG. 14

FIG. 15

FIG. 16

**FIG. 17**

FIG. 18

FIG. 19

FIG. 20

FIG. 21

FIG. 22

## REFERENCES CITED IN THE DESCRIPTION

**Patent documents cited in the description**

- EP 0260890 A2
- JP 553106545 U
- JP 553123750 A
- EP 0239334 A2
- US 3784427 A
- JP 63024181 B
- JP 3709472 B
- JP 11300847 A
- JP 2000352444 A
- JP 2002005242 A
- JP 2002323091 A
- JP 2013024349 A
- US 5068000 A
- US 2004014544 A1
- JP 2015038873 A
- JP 2016029759 A